# EUROPEAN PATENT APPLICATION

(11) **EP 3 845 380 A1**
(43) Date of publication of application: **07.07.2021**
(21) Application number: 19853487.7
(22) Date of filing: 30.08.2019
(51) Int. Cl.: B32B 27/32, B32B 15/085, B32B 27/00, B65D 65/40

(54) **HEAT-SEALABLE LAMINATE, LAYERED SUBSTRATE, LAMINATE FOR GAS BARRIER INTERMEDIATE LAYER, LAMINATE FOR PACKAGING MATERIAL, AND PACKAGING MATERIAL**

(30) Priority: 31.08.2018 JP 2018163979; 31.08.2018 JP 2018163920; 07.09.2018 JP 2018168324; 07.09.2018 JP 2018168334; 07.09.2018 JP 2018168338; 07.09.2018 JP 2018168340; 07.09.2018 JP 2018168344; 07.09.2018 JP 2018168347; 07.09.2018 JP 2018168345; 28.03.2019 JP 2019062475; 28.03.2019 JP 2019062477
(71) Applicant: Dai Nippon Printing Co., Ltd., Tokyo 162-8001 (JP)
(72) Inventor: YAMADA, Kenichi, Tokyo 162-8001 (JP); YONEMOTO, Tomohiro, Tokyo 162-8001 (JP)
(74) Representative: Beck Greener LLP
(86) International application number: PCT/JP2019/034128
(87) International publication number: WO 2020/045629

(57) **Abstract**

[Problem to be solved]

Provided is a heat-sealable laminate which can be used as a heat seal layer of a laminate for a packaging material and has high oxygen barrier properties and water vapor barrier properties.

[Means to solve the problem]

The heat-sealable laminate according to the present invention comprises a gas barrier resin layer, an adhesive resin layer, and a heat-seal polyolefin resin layer, wherein the heat-seal layer is composed of a polyolefin, and the gas barrier resin layer, the adhesive resin layer, and the polyolefin resin layer heat-seal layer are co-extruded unstretched resin films.

## Description

### BACKGROUND OF THE INVENTION

### Field of the Invention

The present invention relates to a heat-sealable laminate, a laminated substrate, a laminate for a gas barrier intermediate layer, a laminate for a packaging material, and a packaging material.

### Background Art

Conventionally, a resin film made of a resin material has been used as a constituent material of a packaging material, and a laminate for a packaging material composed of a plurality of resin films has been widely used. Packaging materials are required to have various functions depending on the contents to be filled. For example, in order to prevent the contents from deteriorating over time, gas barrier properties such as oxygen barrier properties and water vapor barrier properties are required.

Conventionally, a resin film made of a thermoplastic resin such as polypropylene or polyethylene has been used as a heat seal layer; however generally, oxygen barrier properties and water vapor barrier properties are not sufficient, and although the film is used by being bonded to a substrate made of polyester or polyamide, there had been a need for development of a heat seal layer having high oxygen barrier properties and water vapor barrier properties in order to realize higher oxygen barrier properties and water vapor barrier properties as a packaging material.

Generally, a resin film composed of polyolefin cannot be used as a substrate since it is inferior in the strength and heat resistance aspects, and the film is used by being bonded to a substrate such as a resin film composed of polyester, polyamide, or the like, which as such, a normal packaging material is composed of a laminate film in which the substrate and the heat seal layer are comprised of different kinds of resin materials (e.g. Patent Document 1).

In recent years, packaging materials with high recyclability have been required with the increasing demand for construction of a recycling-oriented society. However, since the conventional packaging materials are composed of different kinds of resin materials as described above and it is difficult to separate by each resin material, the current status is that they are not recycled.

Therefore, there had been a need for a polyolefin film substrate having high strength and heat resistance, capable of being used as a substrate, and having high oxygen barrier properties and high water vapor barrier properties.

Further, for example, as a laminate for a packaging material having improved gas barrier properties, a gas barrier layer composed of polyamide or the like is provided as an intermediate layer between a substrate such as a polyester film and a heat seal layer.

However, the laminate for packaging materials has been required for further improvement in gas barrier properties, and an intermediate layer having higher gas barrier properties has been in need.

### Prior Art Documents

### PATENT LITERATURE

Patent Document 1: JP 2009-202519 A

### SUMMARY OF THE INVENTION

### [Problems to be Solved by the Invention]

The present invention has been made in view of the above-described situation, and the object of the present invention is to provide a heat-sealable laminate which can be used as a heat seal layer of a laminate for a packaging material and has high oxygen barrier properties and high water vapor barrier properties.

Another object of the present invention is to provide a laminate for a packaging material comprising the heat-sealable laminate.

The present invention has been made in view of the above-described findings, and the object which the present invention intends to attain is the provision of a laminated substrate which is capable of producing a packaging material having sufficient strength and barrier properties as a packaging material as well as having excellent recycling properties.

Another object of the present invention is to provide a laminate for a packaging material comprising the laminated substrate.

The present invention has been made in view of the above-described situation, and the object which the present invention intends to attain is the provision of a gas barrier laminate for an intermediate layer which can be used as an intermediate layer composing a laminate for a packaging material and has high oxygen barrier properties and high water vapor barrier properties.

Another object of the present invention is to provide a laminate for a packaging material comprising the laminate for an intermediate layer.

Further, the object of the present invention to provide a packaging material composed of the laminate for a packaging material.

### [Means for Solving Problems]

A heat-sealable laminate comprising a gas barrier resin layer, an adhesive resin layer, and a heat seal layer, wherein
the heat seal layer is composed of polyolefin, and
the gas barrier resin layer, the adhesive resin layer and the heat seal layer are co-extruded unstretched resin films.

In one embodiment, the gas barrier resin layer comprises an ethylene-vinyl alcohol copolymer.

A laminate for a packaging material according to the present invention comprises a substrate and the heat-sealable laminate, wherein
the substrate is composed of the same material as the heat seal layer,
the substrate is a stretched resin film,
the same material is polyolefin, and
the thickness of the gas barrier resin layer is smaller than the thickness of the heat seal layer.

A laminated substrate according to the present invention comprises a substrate body and a barrier coating layer, wherein
the substrate is made of polyolefin, and
the substrate body is a stretched resin film.

In one embodiment, the thickness of the barrier coating layer is smaller than the thickness of the substrate body.

In one embodiment, the laminated substrate comprises a vapor-deposited film between the substrate body and the barrier coating layer.

A laminate for a packaging material according to the present invention comprises the laminated substrate and the heat seal layer, wherein
the heat seal layer is composed of the same material as the substrate body, and
the same material is polyolefin.

A laminate for a packaging material according to the present invention comprises a laminated substrate and a heat-sealable laminate, wherein
the substrate comprises a substrate body and a barrier coating layer,
the heat-sealable laminate comprises a vapor-deposited film and a heat seal layer,
the substrate body and the heat seal layer are composed of the same material,
the same material is polyolefin,
the substrate body is a stretched resin film,
the thickness of the barrier coating layer is smaller than the thickness of the substrate body, and
the thickness of the vapor-deposited film is smaller than the thickness of the heat seal layer.

A laminate for a packaging material according to the present invention comprises at least a laminated substrate, an adhesive layer, and a heat-sealable laminate, wherein
the substrate comprises a substrate body and a first vapor-deposited film,
the heat-sealable laminate comprises a second vapor-deposited film and a heat seal layer,
the substrate body and the heat seal layer are composed of the same material,
the same material is polyolefin,
the substrate body is a stretched resin film,
the thickness of the first vapor-deposited film is smaller than the thickness of the substrate body,
the thickness of the second vapor-deposited film is smaller than the thickness of the heat seal layer.

A laminate for a gas barrier intermediate layer according to the present invention comprises a gas barrier resin layer and a polyolefin resin layer and is a co-extruded unstretched resin film.

A laminate for a packaging material according to the present invention comprises a substrate, the laminate for a gas barrier intermediate layer and a heat seal layer, wherein the substrate, the polyolefin resin layer and the heat seal layer are composed of the same material, and the same material is polyolefin.

The packaging material according to the present invention comprises the above-described laminate for a packaging material.

### [Effect of the Invention]

According to the present invention, it is possible to provide a heat-sealable laminate which can be used as a heat seal layer of a laminate for a packaging material and has high oxygen barrier properties and high water vapor barrier properties.

According to the present invention, it is possible to provide a laminate for a packaging material comprising the heat-sealable laminate.

According to the present invention, it is possible to provide a laminated substrate capable of producing a packaging material having sufficient strength and barrier properties as a packaging material and excellent recycling properties.

According to the present invention, it is possible to provide a laminate for a packaging material comprising the laminated substrate.

According to the present invention, it is possible to provide a laminate for a gas barrier intermediate layer which can be used as an intermediate layer composing a laminate for a packaging material and has high oxygen barrier properties and high water vapor barrier properties.

According to the present invention, there is provided a laminate for a packaging material comprising the intermediate layer laminate.

Further, according to the present invention, there is provided a packaging material composed of the above-described laminate for a packaging material.

### [Brief description of the drawings]

FIG. 1 is a schematic cross-sectional view showing one embodiment of a heat-sealable laminate of the present invention.
FIG. 2 is a schematic cross-sectional view showing one embodiment of a heat-sealable laminate of the present invention.
FIG. 3 is a schematic cross-sectional view showing one embodiment of a laminate for a packaging material comprising a heat-sealable laminate of the present invention.
FIG. 4 is a schematic cross-sectional view showing one embodiment of a laminate for a packaging material comprising a heat-sealable laminate of the present invention.
FIG. 5 is a schematic cross-sectional view showing one embodiment of a laminate for a packaging material comprising a heat-sealable laminate of the present invention.
FIG. 6 is a schematic cross-sectional view showing one embodiment of a laminated substrate of the present invention.
FIG. 7 is a schematic cross-sectional view showing one embodiment of a laminate for a packaging material comprising a laminated substrate of the present invention.
FIG. 8 is a schematic cross-sectional view showing one embodiment of a laminate for a packaging material comprising a laminated substrate of the present invention.
FIG. 9 is a schematic cross-sectional view showing one embodiment of a laminate for a packaging material comprising a laminated substrate of the present invention.
FIG. 10 is a schematic cross-sectional view showing one embodiment of a laminate for a packaging material comprising a laminated substrate of the present invention.
FIG. 11 is a schematic cross-sectional view showing one embodiment of the laminate for a gas barrier intermediate layer of the present invention.
FIG. 12 is a schematic cross-sectional view showing one embodiment of the laminate for a gas barrier intermediate layer of the present invention.
FIG. 13 is a schematic cross-sectional view showing one embodiment of a laminate for a packaging material comprising the laminate for a gas barrier intermediate layer of the present invention.
FIG. 14 is a schematic cross-sectional view showing one embodiment of a laminate for a packaging material comprising the laminate for a gas barrier intermediate layer of the present invention.
FIG. 15 is a schematic cross-sectional view showing one embodiment of a laminate for a packaging material comprising the laminate for a gas barrier intermediate layer of the present invention.
FIG. 16 is a schematic cross-sectional view showing one embodiment of a laminate for a packaging material comprising the laminate for a gas barrier intermediate layer of the present invention.
FIG. 17 is a schematic cross-sectional view showing one embodiment of a laminate for a packaging material comprising the laminate for a gas barrier intermediate layer of the present invention.
FIG. 18 is a perspective view showing one embodiment of a packaging material comprising a laminate for a packaging material of the present invention.
FIG. 19 is a perspective view showing one embodiment of a packaging material comprising a laminate for a packaging material of the present invention.

### DETAILED DESCRIPTION OF THE INVENTION

### ((1) Heat-sealable Laminate)

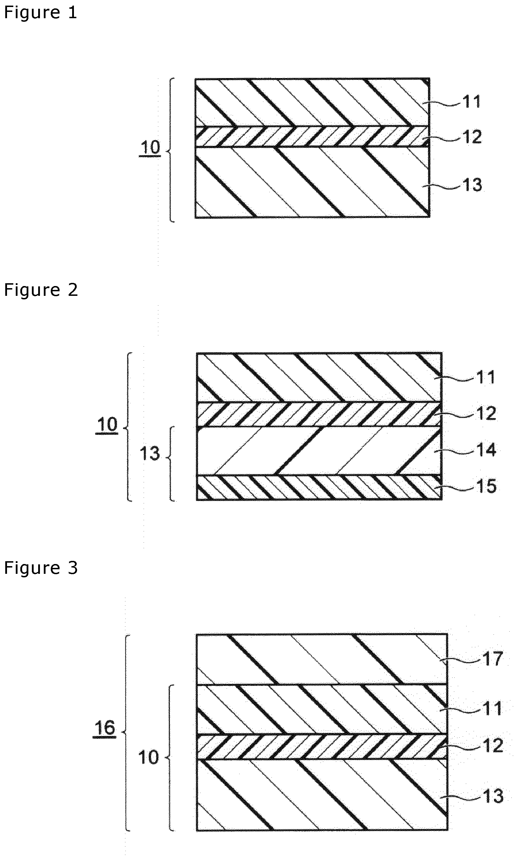

As shown in FIG. 1, a heat-sealable laminate 10 of the present invention is characterized by being a co-extruded unstreched resin film, comprising a gas-barrier resin layer 11, an adhesive resin layer 12, and a heat seal layer 13.

In one embodiment, as shown in FIG. 2, the heat seal layer 13 provided in the heat seal laminate 10 of the present invention includes a first heat seal layer 14 and a second heat seal layer 15.

In the heat-sealable laminate of the present invention, the thickness of the gas-barrier resin layer is preferably smaller than the thickness of the heat seal layer. With such a structure, it is possible to improve the recyclability of a packaging material composed of a laminate for a packaging material obtained by bonding the heat-sealable laminate of the present invention to a polyolefin substrate.

The thickness of the gas barrier resin layer is preferably smaller by 5 µm or more and more preferably 10 µm or more than the thickness of the heat seal layer. By making the thickness of the gas barrier resin layer smaller than the thickness of the heat seal layer by 5 µm or more, it is possible to improve the recyclability of the laminate for a packaging material obtained by bonding the heat seal laminate of the present invention to a polyolefin substrate.

### (Gas Barrier Resin Layer)

The gas barrier resin layer includes at least one gas barrier resin, and examples thereof include resins of ethylene-vinyl alcohol copolymer (EVOH), polyvinyl alcohol, polyacrylonitrile, polyamides such as nylon 6, nylon 6,6, and polymethaxylylene adipamide (MXD6), polyester, polyurethane, and (meth)acryl, and preferred amongst these is EVOH from the viewpoint of oxygen barrier properties and water vapor properties.

The ethylene content in the EVOH is preferably 20 % by mass to 60 % by mass, and more preferably 27 % by mass to 48 % by mass.

When the ethylene content in the EVOH is 20 % by mass or more, the processability can be improved. By setting the ethylene content in the EVOH to 60 % by mass or less, oxygen barrier properties and water vapor barrier properties can be improved.

The content of the gas barrier resin in the gas barrier resin layer is preferably 50% by mass or more, and more preferably 75% by mass or more.

By setting the content of the gas barrier resin in the gas barrier resin layer to 50 % by mass or more, it is possible to further improve oxygen barrier properties and water vapor barrier properties.

When the heat-sealable laminate of the present invention is applied as the heat seal layer of the laminate for a packaging material, the content of the gas-barrier resin in the entire laminate for a packaging material is preferably 20% by mass or less, and more preferably 10% by mass or less.

By setting the content of the gas barrier resin in the entire laminate for a packaging material to 20 % by mass or less, it is possible to improve the recyclability of the laminate for a packaging material to be produced.

The gas barrier resin layer may contain an additive within the range so that the characteristics of the present invention are not impaired. Examples of the additives include a crosslinking agent, an antioxidant, an anti-blocking agent, a slip agent, an ultraviolet absorber, a light stabilizer, a filler, a reinforcing agent, an antistatic agent, a compatibilizer and a pigment.

The thickness of the gas barrier resin layer is preferably 0.5 µm or more and 10 µm or less, and more preferably 1 µm or more and 7 µm or less.

By setting the thickness of the gas barrier resin layer to 0.5 µm or more, it is possible to improve oxygen barrier properties and water vapor barrier properties. Further, by setting the thickness of the gas barrier resin layer to 10 µm or less, the heat-sealable laminate of the present invention is applied as the heat seal layer of the packaging laminate, and the recyclability of the packaging laminate can be improved.

### (Adhesive Resin Layer)

The adhesive resin layer comprises at least one resin material, such as polyolefin, modified polyolefin, polyester, and a vinyl resin, and polyamide. Among these, polyolefin and modified polyolefin are preferable from the viewpoint of adhesion.

The adhesive resin layer may contain the above-mentioned additives within a range so that the characteristics of the present invention are not impaired.

The thickness of the adhesive resin is preferably 0.5 µm to 10 µm and more preferably 1 µm to 5 µm.

By setting the thickness of the adhesive resin layer to 0.5 µm or more, it is possible to improve the adhesion between the gas barrier resin layer and the polyolefin resin layer. Further, by setting the thickness of the adhesive resin layer to 10 µm or less, the recyclability of the laminate for packaging materials can be improved when the heat-sealable laminate of the present invention is applied as the heat seal layer of the laminate for a packaging material.

### (Heat Seal Layer)

The heat seal layer is composed of polyolefin, and examples thereof include polyethylene, polypropylene, polymethylpentene, ethylene-propylene copolymer, and propylene-butene copolymer, and polyethylene and polypropylene are preferred among these from the viewpoint of heat-sealable properties.

Examples of polyethylene includes high-density polyethylene (HDPE) with a density greater than 0.945 g/cm³, medium-density polyethylene (MDPE) with a density between 0.925 and 0.945 g/cm³, low-density polyethylene (LDPE) with a density less than 0.925 g/cm³, and a linear low-density polyethylene (LLDPE).

Polypropylene may be any of a homopolymer, a random copolymer or a block copolymer.

A polypropylene homopolymer is a polymer of only propylene, a polypropylene random copolymer is a random copolymer of propylene and α-olefin other than propylene (for example, ethylene, butene-1, 4-methyl-1-pentene, etc.), and the polypropylene block copolymer is a copolymer having a polymer block comprising propylene and the above-mentioned α-olefin other than propylene.

The heat seal layer is formed of an unstretched polyolefin resin film or is formed by melt extrusion of polyolefin.

When the heat seal layer is composed of polypropylene, the heat seal layer may contain a heat seal modifier for improving the heat sealing properties. The heat seal modifier is not particularly limited as long as it has excellent compatibility with the polyolefin constituting the heat seal layer, and an example thereof includes an olefin copolymer.

The thickness of the heat seal layer is preferably 5 µm or more and 100 µm or less, and more preferably 10 µm or more and 50 µm or less.

By setting the thickness of the heat seal layer to 5 µm or more, it is possible to improve the heat sealing properties of the heat seal layer. By setting the thickness of the heat seal layer to 100 µm or less, it is possible to improve the recyclability of the laminate for a packaging material when the heat-sealable laminate of the present invention is applied to a laminate for a packaging material comprising a polyolefin substrate.

In one embodiment, the heat seal layer may have a multi-layer structure. In particular, when a heat seal modifier is added to the heat seal layer, the modifier may migrate (leach out) to the gas barrier resin layer side, so it is possible to make the heat seal layer to be composed of two or more layers, the side to be subjected to heat sealing (the innermost layer side of the laminate) to be a layer containing a polyolefin resin and the heat seal modifier, and the outer layer to be a layer composed of a polypropylene resin.

That is, examples of the multilayer structure include a multilayer structure comprising a first heat seal layer composed of polyolefin and a second heat seal layer composed of polyolefin and a heat seal modifier.

The content of the heat seal modifier in the second heat seal layer is preferably from 10% by mass to 50% by mass and more preferably from 20% by mass to 40% by mass.

By setting the content of the heat seal modifier in the second heat seal layer to 10 % by mass or more, it is possible to improve the heat sealing performance of the second heat seal layer. Further, by setting the content of the heat seal modifier in the second heat seal layer to 50 % by mass or less, it is possible to improve the recyclability of the laminate for a packaging material when the heat seal laminate of the present invention is applied to a laminate for a packaging material comprising a polyolefin substrate.

When the heat seal layer has a two-layer structure, the thickness of the first heat seal layer is preferably 5 µm to 50 µm and more preferably 7 µm to 45 µm or less.

By setting the thickness of the first heat seal layer to 5 µm or more, it is possible to improve the recyclability of the laminate for a packaging material and the heat sealing properties of the first heat seal layer of the present invention. In addition, by setting the thickness of the first heat seal layer to 50 µm or less, it is possible to improve the processability of the laminate for a packaging material of the present invention.

The thickness of the second heat seal layer is preferably 5 µm to 20 µm and more preferably 7 µm to 15 µm.

By setting the thickness of the second heat seal layer to 5 µm or more, it is possible to improve the heat-sealable properties of the second heat seal layer. Further, by setting the thickness of the second heat seal layer to 20 µm or less, it is possible to improve the processability, and also the recyclability of the laminate for a packaging material when the heat seal laminate of the present invention is applied to a laminate for a packaging material comprising a polyolefin substrate.

The heat-sealable laminate can be produced by film forming by co-extrusion of a material composing the gas-barrier resin layer, a material composing the adhesive resin layer, and a material composing the heat seal layer with a conventionally known method such as a T-die method or an inflation method.

### ((2) Laminate for Packaging Material)

As shown in FIG. 3, a laminate for a packaging material 16 of the present invention comprises a substrate 17 and the heat-sealable laminate 10 as above, wherein said substrate is a stretched resin film composed of the same polyolefin as the polyolefin composing the heat seal layer of the heat-sealable laminate.

Generally, a resin film composed of polyolefin cannot be used as a substrate because it is inferior in the aspects of strength and heat resistance; and thus it is used by being bonded to a resin film composed of polyester, polyamide, and the like, and accordingly, a normal packaging material is composed of a laminated film in which the substrate and the heat seal layer are composed of different kinds of resin materials.

In recent years, with the increasing demand for the construction of a recycling-oriented society, there has been required a packaging material with high recyclability. However, as described above, the conventional packaging materials are composed of different kinds of resin materials, and it is difficult to separate them by each resin material, so the current status is that they are not recycled.

The present inventors have found that polyolefin, which has been conventionally used as a heat seal layer, can be used as a substrate by forming into a stretched resin film, and that a packaging material having sufficient strength and heat resistance as a packaging material and having high recycling properties can be obtained by laminating the substrate with a heat seal laminate provided with a heat seal layer composed of the same polyolefin. The present inventors have also found that the heat-sealable laminate of the present invention has high oxygen barrier properties and water vapor barrier properties, and can be used as a packaging material having both barrier properties and recycling properties.

That is, according to the present invention, it is possible to provide a laminate for a packaging material which can realize a packaging material having excellent recycling properties while having strength and barrier properties as a packaging material.

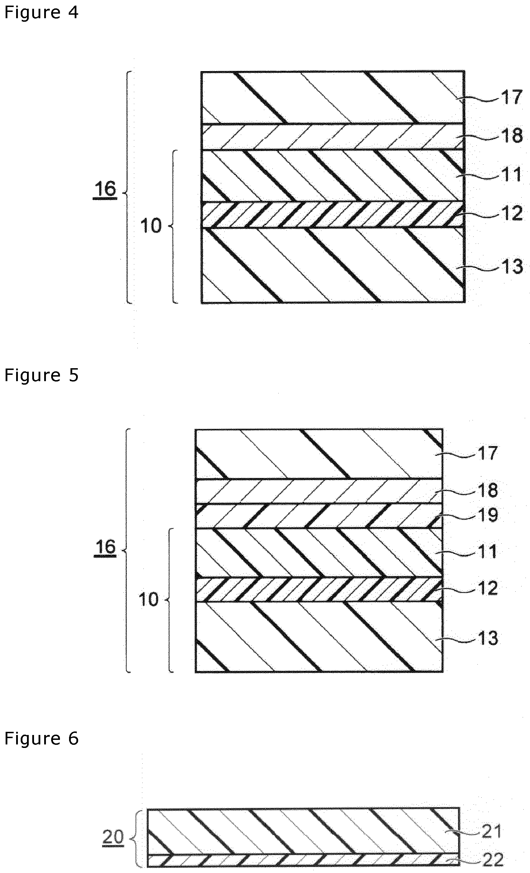

In one embodiment, as shown in FIG. 4, the laminate for a packaging material 16 of the present invention can further comprise a vapor-deposited film 18 between the substrate 17 and the heat-sealable laminate 10.

In one embodiment, as shown in FIG. 5, the laminate for a packaging material 16 of the present invention can further comprise an adhesive layer 19 between the substrate 17 and the vapor-deposited film 18.

In one embodiment, the laminate for a packaging material according to the present invention can comprise an intermediate layer between the substrate and the heat-sealable laminate.

Further, in one embodiment according to the present invention, the laminate for a packaging material 16 of the present invention may comprise a gas barrier coating film between any layers (not illustrated).

The content of the same polyolefin in the laminate for a packaging material of the present invention is preferably 80% by mass or more and more preferably 90% by mass or more.

By setting the content of the same polyolefin in the entire laminate for a packaging material of the present invention to 80% by mass or more, it is possible to improve the recyclability of the laminate for a packaging material of the present invention.

The content of the same polyolefin in the laminate for a packaging material means the ratio of the content of the same polyolefin to the sum of the content of the resin materials in each layer constituting the laminate.

Hereinafter, each layer composing the laminate for a packaging material will be described. Since the description of the heat-sealable laminate shall be omitted as it has already been described.

### (Substrate)

The substrate provided in the laminate for a packaging material of the present invention is a stretched resin film composed of polyolefin. The stretched resin film may be either a uniaxially stretched resin film or a biaxially stretched resin film.

The stretching magnification ratio in the machine direction (MD) of the stretched resin film is preferably from 2 times to 10 times and preferably from 3 times to 7 times.

By setting the stretching magnification ratio of the stretched resin film in the machine direction (MD) to 2 times or more, it is possible to improve the strength and heat resistance of the laminate for a packaging material of the present invention. Further, since the transparency of the substrate can be improved, the visibility can be improved when an image is formed on the heat-sealable laminate-side surface of the substrate. On the other hand, the upper limit of the stretching magnification ratio in the machine direction (MD) of the stretched resin film is not particularly limited, and is preferably 10 times or less from the viewpoint of breaking limit of the stretched resin film.

The stretching magnification ratio of the stretched resin film in the transverse direction (TD) is preferably from 2 times to 10 times and preferably from 3 times to 7 times.

By setting the stretching magnification ratio of the stretched resin film in the transverse direction (TD) to be 2 times or more, it is possible to improve the strength and heat resistance of the laminate for a packaging material of the present invention. Further, since the transparency of the substrate can be improved, the visibility can be improved when an image is formed on the heat-sealable laminate-side surface of the substrate. On the other hand, the upper limit of the stretching magnification ratio of the stretched resin film in the transverse direction (TD) is not particularly limited; however it is preferably 10 times or less from the viewpoint of the breaking limit of the stretched resin film.

The substrate provided in the laminate for a packaging material of the present invention is composed of polyolefin, and this polyolefin is the same as the polyolefin composing the heat seal layer of the heat sealing laminate. By using the same polyolefin as the polyolefin composing the substrate and the heat seal layer, it is possible to improve the recyclability of the laminate for packaging materials.

Examples of the polyolefin include polyethylene, polypropylene, polymethylpentene, ethylene-propylene copolymer and propylene-butene copolymer, among which polyethylene and polypropylene are preferred.

In one embodiment, it is possible to use a substrate comprising a layer composed of high-density polyethylene (hereinafter referred to as a high-density polyethylene layer) and a layer of medium-density polyethylene (hereinafter referred to as a medium-density polyethylene layer).

By providing a high-density polyethylene layer on the outside of the substrate, it is possible to improve the strength and heat resistance of the laminate for a packaging material of the present invention. Further, by providing the medium-density polyethylene layer, it is possible to improve the stretching property of the resin film composing the substrate.

For example, the substrate has a structure comprising a high-density polyethylene layer / medium-density polyethylene layer from the outside.

Such a structure can improve the stretching property of the resin film.

Further, the strength and heat resistance of the laminate for a packaging material of the present invention can be improved.

In this case, the thickness of the high-density polyethylene layer is preferably smaller than the thickness of the medium-density polyethylene layer.

The ratio of the thickness of the high-density polyethylene layer to the thickness of the medium-density polyethylene layer is preferably 1/10 to 1/1 and more preferably 1/5 to 1/2.

By setting the ratio of the thickness of the high-density polyethylene layer to the thickness of the medium-density polyethylene layer to 1/10 or more, it is possible to improve the strength and heat resistance of the laminate for a packaging material of the present invention. Further, by setting the ratio of the thickness of the high-density polyethylene layer to the thickness of the medium-density polyethylene layer to 1/1 or less, the stretching property of the resin film can be improved.

Further, for example, the substrate can have a structure comprising a high-density polyethylene layer / medium-density polyethylene layer / high-density polyethylene layer from the outside.

Such a structure can improve the stretching property of the resin film.

Further, the strength and heat resistance of the laminate for a packaging material of the present invention can be improved. It is also possible to prevent the substrate from curling.

In this case, the thickness of the high-density polyethylene layer is preferably smaller than the thickness of the medium-density polyethylene layer.

The ratio of the thickness of the high-density polyethylene layer to the thickness of the medium-density polyethylene layer is preferably 1/10 to 1/1 and more preferably 1/5 to 1/2.

By setting the ratio of the thickness of the high-density polyethylene layer to the thickness of the medium-density polyethylene layer to 1/10 or more, it is possible to improve the strength and heat resistance of the laminate for a packaging material of the present invention. Further, by setting the ratio of the thickness of the high-density polyethylene layer to the thickness of the medium-density polyethylene layer to 1/1 or less, the stretching property of the resin film can be improved.

For example, the substrate can also have a structure comprising a high-density polyethylene layer / medium-density polyethylene layer /low-density polyethylene layer or a linear low-density polyethylene layer /medium-density polyethylene layer / high-density polyethylene layer from the outside.

Such a structure can improve the stretching property of the resin film.

Further, the strength and heat resistance of the laminate for a packaging material of the present invention can be improved. It is also possible to prevent the substrate from curling. Further, it is possible to improve the processability of the resin film.

In this case, the thickness of the high-density polyethylene layer is preferably smaller than the thickness of the medium-density polyethylene layer.

The ratio of the thickness of the high-density polyethylene layer to the thickness of the medium-density polyethylene layer is preferably 1/10 to 1/1 and more preferably 1/5 to 1/2.

By setting the ratio of the thickness of the high-density polyethylene layer to the thickness of the medium-density polyethylene layer to 1/10 or more, it is possible to improve the strength and heat resistance of the laminate for a packaging material of the present invention. Further, by setting the ratio of the thickness of the high-density polyethylene layer to the thickness of the medium-density polyethylene layer to 1/1 or less, the stretching property of the resin film can be improved.

The thickness of the high-density polyethylene layer is preferably smaller than the thickness of the low-density polyethylene layer or the linear low-density polyethylene layer.

The ratio of the thickness of the high-density polyethylene layer to the thickness of the low-density polyethylene layer or the linear low-density polyethylene layer is preferably 1 / 10 to 1 / 1 and more preferably 1 / 5 to 1 / 2.

By setting the ratio of the thickness of the high-density polyethylene layer to the thickness of the low-density polyethylene layer or the linear low-density polyethylene layer to 1 / 10 or more, it is possible to improve the heat resistance. Further, by setting the ratio of the thickness of the high-density polyethylene layer to the thickness of the low-density polyethylene layer or the linear low-density polyethylene layer to 1/1 or less, the processability of the resin film can be improved.

Among the above-described polypropylenes, use of a homopolymer or a random copolymer is preferred from the viewpoint of improving the transparency of the substrate and improving the visibility thereof when an image is formed on the surface of the heat-sealable laminate side of the substrate. When rigidity and heat resistance of the packaging material are to be considered important, a homopolymer can be used, and when impact resistance is to be considered important, a random copolymer can be used.

As a raw material for obtaining the polyolefin, an olefin monomer derived from biomass may be used instead of an olefin monomer obtained from fossil fuels. Since the biomass-derived olefin monomer is a carbon-neutral material, it can be used as a packaging material having less environmental burden.

Such biomass-derived polyolefin, for example, polyethylene can be produced by a method described in JP2013-177531. Use can also be made to commercially available biomass-derived polyolefins (e.g. Green PE available from Braskem S.A.).

Also, polyolefin recycled by mechanical recycling can be used. As used herein, mechanical recycling is generally a method in which recovered polyolefin films, etc. are pulverized and washed with alkali to remove dirt and foreign matters on the film surface, and subsequently dried under high temperature and reduced pressure for a certain period of time to diffuse and decontaminate the contaminants remaining in the film, thereby removing the dirt from the polyolefin films and returning the films to polyolefin again.

The substrate may have an image formed on its surface. Although the image may be formed on any surface of the substrate, it is preferable to form the image on the surface of the heat-sealable laminate side since it is possible to prevent contact with the outside air and thus deterioration over time can be prevented.

The image to be formed is not particularly limited, and a character, a pattern, a symbol, a combination thereof, etc. are formed.

The image can be formed using a conventionally known ink, and it is preferable to form the image using a biomass-derived ink. Thus, a packaging material having less environmental impact can be produced using the laminate of the present invention.

The method for forming an image is not particularly limited, and examples thereof include conventionally known printing methods such as a gravure printing method, offset printing method, and flexographic printing method. Among these methods, the flexographic printing method is because it can reduce the environmental load.

The substrate is preferably subjected to a surface treatment. As a result, adhesion with adjacent layers can be improved.

The method of the surface treatment is not particularly limited, and examples thereof include physical treatments such as a corona discharge treatment, ozone treatment, low-temperature plasma treatment using an oxygen gas and/or nitrogen gas, etc., glow discharge treatment, and chemical treatments such as an oxidation treatment using a chemical agent.

Further, an anchor coating layer may be formed on the surface of the substrate using a known anchor coating agent.

The thickness of the substrate is preferably 5 µm to 300 µm and more preferably 7 µm to 100 µm.

By setting the thickness of the substrate to 5 µm or more, it is possible to improve the strength of the laminate for a packaging material of the present invention. By setting the thickness of the substrate to 300 µm or less, the processability of the laminate for a packaging material of the present invention can be improved.

The substrate can be produced by forming a film of polyolefin by the T-die method or an inflation method, and carrying out stretching after the film has been produced.

According to the inflation method, film formation and stretching can be performed simultaneously.

When the substrate is produced by the T-die method, the MFR of polyolefin is preferably 5 g/10 min to 20 g/10 min.

By setting the MFR of the polyolefin to 5 g/10 min or more, it is possible to improve the processability of the laminate for a packaging material of the present invention. Further, by setting the MFR of the polyolefin to 20 g/10 min or less, it is possible to prevent the resin film from being broken.

When the substrate is produced by the inflation method, the MFR of polyolefin is preferably 0.5 g/10 min to 5 g/10 min.

By setting the MFR of polyolefin to 0.5 g/10 min or more, it is possible to improve the processability of the laminate for a packaging material of the present invention. The film forming property can also be improved by setting the MFR of the polyolefin to 5 g/10 min or less.

The substrate is not limited to the substrate produced by the above method, and a commercially available substrate may be used.

### (Vapor-deposited film)

The laminate for a packaging material of the present invention may further comprise a vapor-deposited film between the substrate and the heat-sealable laminate. By providing the vapor-deposited film, the oxygen barrier properties and the water vapor barrier properties can be further improved.

Examples of the vapor-deposited film include vapor-deposited films composed of metals such as aluminum and inorganic oxides such as aluminum oxide, silicon oxide, magnesium oxide, calcium oxide, zirconium oxide, titanium oxide, boron oxide, hafnium oxide and barium oxide.

The thickness of the vapor-deposited film is preferably from 1 nm to 150 nm, more preferably from 5 nm to 60 nm, and further preferably from 10 nm to 40 nm.

By setting the thickness of the vapor-deposited film to 1 nm or more, it is possible to improve the oxygen barrier properties and the water vapor barrier properties of the laminate for a packaging material of the present invention even more.

In addition, by setting the thickness of the vapor-deposited film to 150 nm or less, it is possible to prevent the cracks from forming in the vapor-deposited film and also to improve the recyclability of the laminate for a packaging material of the present invention.

When the vapor-deposited film is an aluminum vapor-deposited film, the OD value thereof is preferably 2 or more and 3.5 or less. Thus, the oxygen barrier properties and the water vapor barrier properties can be improved while maintaining the productivity of the laminate for a packaging material of the present invention. In the present invention, the OD value can be measured in accordance with JIS-K-7361.

The vapor-deposited film can be formed by a conventionally known method, and examples thereof include physical vapor deposition methods (PVD methods) such as a vacuum deposition method, sputtering method, and ion plating method, and chemical vapor deposition methods (CVD methods) such as a plasma chemical vapor deposition method, thermochemical vapor deposition method, and photochemical vapor deposition method.

Further, for example, it is also possible to form a composite film composed of two or more layers of vapor-deposited films of different inorganic oxides by using both the physical vapor deposition method and the chemical vapor deposition method. Vacuum degree of the deposition chamber is preferably about 10⁻² to 10⁻⁸ mbar when before introducing oxygen and preferably about 10⁻¹ to 10⁻⁶ mbar after introducing oxygen. The amount of oxygen introduced varies depending on the size of the deposition apparatus. As the oxygen to be introduced, inert gases such as argon gas, helium gas or nitrogen gas may be used as carrier gases within a range that does not cause any problem. The conveying speed of the film can be about 10 to 800m / min.

The surface of the vapor-deposited film is preferably subjected to the surface treatment above. As a result, adhesion with adjacent layers can be improved.

### (Adhesive Layer)

In the laminate for a packaging material of the present invention, an adhesive layer may be provided for the purpose of improving the adhesion between the surface on which the vapor-deposited film is provided and the surface (adhesion surface) to which the vapor-deposited film is adhered. That is, when the vapor-deposited film is provided on the surface of the substrate, an adhesive layer can be provided between the vapor-deposited film and the heat-sealable laminate, and when the vapor-deposited film is provided on the surface of the heat seal layer of the heat-sealable laminate, an adhesive layer can be provided between the vapor-deposited film and the substrate.

The adhesive layer includes at least one adhesive and may be either a one-part curing type, a two-part curing type, or a non-curing type adhesive. The adhesive may be a solvent free adhesive or a solvent form adhesive, and a solvent-free adhesive is preferably used from the viewpoint of environmental burden.

Examples of the solvent-free adhesive include polyether-based adhesives, polyester-based adhesives, silicone-based adhesives, epoxy-based adhesives, and urethane-based adhesives, among which preferred use is made to a two-part curing urethane-based adhesive.

Examples of the solvent form adhesive include rubber-based adhesives, vinyl-based adhesives, silicone-based adhesives, epoxy-based adhesives, phenol-based adhesives and olefin-based adhesives.

When the laminate for a packaging material of the present invention includes an aluminum vapor-deposited film as the vapor-deposited film, the adhesive layer is preferably composed of a cured product of a resin composition comprising a polyester polyol and an isocyanate compound.

By adopting such a structure for the adhesive layer, it is possible to improve the oxygen barrier properties and the water vapor barrier properties of the laminate for a packaging material of the present invention.

Further, when the laminate provided with the vapor-deposited film is usually applied to the packaging material, there is a risk that the aluminum vapor-deposited film may be cracked since the laminate is applied with bending load by a molding machine or the like. By using the specific adhesive as described above, it is possible to suppress the oxygen barrier properties and the water vapor barrier properties from deteriorating even when the aluminum vapor-deposited film is cracked.

The polyester polyol has two or more hydroxyl groups in one molecule as functional groups. The isocyanate compound has two or more isocyanate groups in one molecule as functional groups.

The polyester polyol has, for example, a polyester structure or a polyester polyurethane structure as a main skeleton.

As specific examples of the resin composition containing a polyester polyol and an isocyanate compound, the series of PASLIM sold by DIC K.K. can be used.

The resin composition may further include a plate-form inorganic compound, a coupling agent, a cyclodextrin and/or a derivative thereof.

As the polyester polyol having two or more hydroxyl groups in one molecule as functional groups, for example, the following [1^{st} Example] to [3^{rd} Example] can be used.
[1^{st} Example] Polyester polyol obtained by polycondensation of an ortho-oriented polyvalent carboxylic acid or an anhydride thereof with a polyhydric alcohol
[2^{nd} Example] Polyester polyol having a glycerol skeleton
[3^{rd} Example] Polyester polyol having an isocyanuric ring

Each polyester polyol will be described below.

The polyester polyol according to the 1^{st} Example is a polycondensate obtained from polycondensation of a polycarboxylic acid component containing at least one or more orthophthalic acid and an anhydride thereof and a polyhydric alcohol component containing at least one selected from the group consisting of ethylene glycol, propylene glycol, butylene glycol, neopentyl glycol and cyclohexane dimethanol.

In particular, polyester polyols in which the content of orthophthalic acid and its anhydride is 70 to 100% by mass with respect to all components of the polycarboxylic acid are preferred.

The polyester polyol according to the 1^{st} Example essentially include an orthophthalic acid and an anhydride thereof as a polyvalent carboxylic acid component; however, other polyvalent carboxylic acid components may be copolymerized as long as the effect of the present embodiment is not impaired.

Specific examples thereof include aliphatic polycarboxylic acids such as succinic acid, adipic acid, azelaic acid, sebacic acid and dodecanedicarboxylic acid; polycarboxylic acids containing unsaturated bonds such as maleic anhydride, maleic acid and fumaric acid; alicyclic polycarboxylic acids such as 1,3-cyclopentanedicarboxylic acid and 1,4-cyclohexanedicarboxylic acid; terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyl dicarboxylic acid, 1,2-bis(phenoxy)ethane-p,p'-dicarboxylic acid; anhydrides of these dicarboxylic acids and ester-forming derivatives of these dicarboxylic acids; and polybasic acids such as p-hydroxybenzoic acid, p-(2-hydroxyethoxy)benzoic acid and ester-forming derivatives of these dihydroxycarboxylic acids. Preferred among these are succinic acid, 1,3-cyclopentanedicarboxylic acid, and isophthalic acid.

Two or more of the above-mentioned other polyvalent carboxylic acids may be used.

An example of the polyester polyol according to the 2^{nd} Example include a polyester polyol having a glycerol skeleton represented by general formula (1).

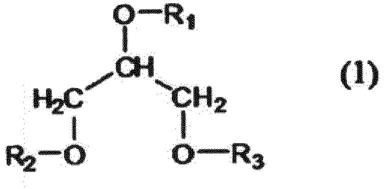

In general formula (1), R₁, R₂, and R₃ each independently represent H (hydrogen atom) or a group represented by the following general formula (2).

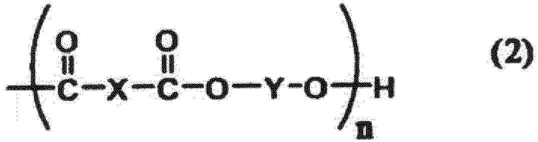

In formula (2), n represents an integer of 1 to 5, X represents an arylene group selected from the group consisting of 1,2-phenylene group, 1,2-naphthylene group, 2,3-naphthylene group, 2,3-anthraquinonediyl group and 2,3-anthracenediyl group, optionally having substituents, and Y represents an alkylene group having 2 to 6 carbon atoms.

However, at least one of R₁, R₂, and R₃ represents a group represented by general formula (2).

In general formula (1), at least one of R₁, R₂, and R₃ needs to be a group represented by general formula (2). In particular, it is preferable that all of R₁, R₂, and R₃ are groups represented by general formula (2).

Further, any two or more of a compound from a compound in which any one of R₁, R₂, and R₃ is a group represented by general formula (2), a compound in which any two of R₁, R₂, and R₃ are groups represented by general formula (2), and a compound in which all of R₁, R₂, and R₃ are groups represented by general formula (2) may be made into a mixture.

X represents an arylene group optionally having a substituent, selected from the group consisting of 1,2-phenylene group, 1,2-naphthylene group, 2,3-naphthylene group, 2,3-anthraquinone diyl group and 2,3-anthracenediyl group.

When X is substituted with a substituent, it may be substituted with one or more substituents, and the substituent is attached to any carbon atom on X that is different from the free radicals. Examples of the substituents include a chloro group, bromo group, methyl group, ethyl group, i-propyl groups, hydroxyl group, methoxy group, ethoxy group, phenoxy group, methylthio group, phenylthio group, cyano group, nitro group, amino group, phthalimide group, carboxyl group, carbamoyl group, N-ethylcarbamoyl group, phenyl group, and naphthyl group.

In general formula (2), Y represents an alkylene group having 2 to 6 carbon atoms, such as an ethylene group, propylene group, butylene group, neopentylene group, 1,5-pentylene group, 3-methyl-1,5-pentylene group, 1,6-hexylene group, methylpentylene group, and dimethylbutylene group. Among these, Y is preferably a propylene group or an ethylene group, and most preferably an ethylene group.

A polyester resin compound having a glycerol skeleton represented by general formula (1) can be synthesized by reacting glycerol, an aromatic polycarboxylic acid or anhydrides thereof in which a carboxylic acid is substituted at an ortho position, and a polyhydric alcohol component as essential components.

Examples of the aromatic polyvalent carboxylic acid or an anhydride thereof in which the carboxylic acid is substituted at the ortho position include orthophthalic acid or an anhydride thereof, naphthalene 2,3-dicarboxylic acid or an anhydride thereof, naphthalene 1,2-dicarboxylic acid or an anhydride thereof, anthraquinone 2,3-dicarboxylic acid or an anhydride thereof, and 2,3-anthracene carboxylic acid or an anhydride thereof.

These compounds may have a substituent at any carbon atom of the aromatic ring. Examples of the substituents include a chloro group, bromo group, methyl group, ethyl group, i-propyl group, hydroxyl group, methoxy group, ethoxy group, phenoxy group, methylthio group, phenylthio group, cyano group, nitro group, amino group, phthalimide group, carboxyl group, carbamoyl group, N-ethylcarbamoyl group, phenyl group and naphthyl group.

Examples of the polyhydric alcohol component include an alkylene diol having 2 to 6 carbon atoms. Examples include diols such as ethylene glycol, propylene glycol, butylene glycol, neopentyl glycol, 1,5-pentanediol, 3-methyl-1,5-pentanediol, 1,6-hexanediol, methylpentanediol and dimethylbutanediol.

The polyester polyol according to the 3^{rd} Example is a polyester polyol having an isocyanuric ring represented by general formula (3).

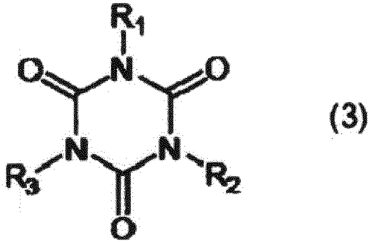

In general formula (3), R₁, R₂, and R₃ each independently represent "-(CH₂) n1-OH (wherein n1 represents an integer of 2 to 4)" or the structure of general formula (4).

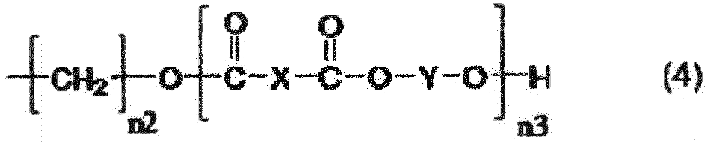

In general formula (4), n2 represents an integer from 2 to 4, n3 represents an integer from 1 to 5, X represents an arylene group optionally having substituents, selected from the group consisting of 1,2-phenylene group, 1,2-naphthylene group, 2,3-naphthylene group, 2,3-anthraquinonediyl group and 2,3-anthracenediyl group and, and Y represents an alkylene group having 2 to 6 carbon atoms. However, at least one of R₁, R₂, and R₃ is a group represented by general formula (4).

In general formula (3), an alkylene group represented by -(CH₂)n1- may be linear or branched. n1 is preferably 2 or 3 and most preferably 2.

In general formula (4), n2 represents an integer from 2 to 4, and n3 represents an integer from 1 to 5.

X represents an arylene group optionally having substituents, selected from the group consisting of 1,2-phenylene group, 1,2-naphthylene group, 2,3-naphthylene group, 2,3-anthraquinonediyl group and 2,3-anthracenediyl group.

When X is substituted with a substituent, it may be substituted with one or more substituents, and said substituents are attached to any carbon atom on X that is different from the free radicals. Examples of the substituents include a chloro group, bromo group, methyl group, ethyl group, i-propyl group, hydroxyl group, methoxy group, ethoxy group, phenoxy group, methylthio group group, phenylthio group, cyano group, nitro group, amino group, phthalimide group, carboxyl group, carbamoyl group, N-ethylcarbamoyl group, phenyl group, and naphthyl group.

In particular, substituents for X are preferably a hydroxyl group, cyano group, nitro group, amino group, phthalimide group, carbamoyl group, N-ethylcarbamoyl group and phenyl group, and most preferably a hydroxyl group, phenoxy group, cyano group, nitro group, phthalimide group and phenyl group.

In general formula (4), Y represents an alkylene group having 2 to 6 carbon atoms, such as an ethylene group, propylene group, butylene group, neopentylene group, 1,5-pentylene group, 3-methyl-1,5-pentylene group, 1,6-hexylene group, methylpentylene group, and dimethylbutylene group. Among these, Y is preferably a propylene group or ethylene group, and most preferably an ethylene group.

In general formula (3), at least one of R₁, R₂, and R₃ is a group represented by general formula (4). In particular, it is preferable that all of R₁, R₂, and R₃ are groups represented by general formula (4).

Further, any two or more of a compound from a compound in which any one of R₁, R₂, and R₃ is a group represented by general formula (4), a compound in which any two of R₁, R₂, and R₃ are groups represented by general formula (4), and a compound in which all of R₁, R₂, and R₃ are groups represented by general formula (4) may be made into a mixture.

The polyester polyol having an isocyanuric ring represented by general formula (3) can be synthesized by reacting triol having an isocyanuric ring with an aromatic polycarboxylic acid or anhydrides thereof in which a carboxylic acid is substituted at the ortho position, and a polyhydric alcohol component as essential components.

Examples of the triol having an isocyanuric ring include an alkylene oxide adduct of isocyanuric acid such as 1,3,5-tris(2-hydroxyethyl)isocyanuric acid and 1,3,5-tris(2-hydroxypropyl)isocyanuric acid.

Examples of the aromatic polyvalent carboxylic acid or an anhydride thereof in which the carboxylic acid is substituted at the ortho position include orthophthalic acid or anhydrides thereof, naphthalene 2,3-dicarboxylic acid or anhydrides thereof, naphthalene 1,2-dicarboxylic acid or anhydrides thereof, anthraquinone 2,3-dicarboxylic acid or anhydrides thereof, and 2,3-anthracene carboxylic acid or anhydrides thereof. These compounds may have a substituent at any carbon atom of the aromatic ring.

Examples of the substituents include a chloro group, bromo group, methyl group, ethyl group, i-propyl group, hydroxyl group, methoxy group, ethoxy group, phenoxy group, methylthio group, phenylthio group, cyano group, nitro group, amino group, phthalimide group, carboxyl group, carbamoyl group, N-ethylcarbamoyl group, phenyl group and naphthyl group.

Examples of the polyhydric alcohol component include alkylene diols having 2 to 6 carbon atoms. Examples include diols such as ethylene glycol, propylene glycol, butylene glycol, neopentyl glycol, 1,5-pentanediol, 3-methyl-1,5-pentanediol, 1,6-hexanediol, methylpentanediol, and dimethylbutanediol.

Among these, a polyester polyol compound having an isocyanuric ring, in which 1,3,5-tris(2-hydroxyethyl)isocyanuric acid or 1,3,5-tris(2-hydroxypropyl)isocyanuric acid is used as a triol compound having an isocyanuric ring, an orthophthalic acid anhydride is used as an aromatic polyvalent carboxylic acid in which the carboxylic acid is substituted at the ortho position or anhydrides thereof, and ethylene glycol is used as a polyhydric alcohol is particularly preferred since it has excellent oxygen barrier properties and adhesiveness.

The isocyanuric ring is highly polar and tri-functional, and can increase the polarity of the entire system and can also increase the crosslinking density. From this point of view, it is preferable that the isocyanuric ring is contained in 5 % by mass or more based on the total solid content of the adhesive resin.

An isocyanate compound has two or more isocyanate groups in the molecule.

An isocyanate compound may be aromatic or aliphatic, and may be a low molecular weight compound or a high molecular weight compound.

Further, an isocyanate compound may be a blocked isocyanate compound obtained by an addition reaction using a known isocyanate blocking agent by a conventionally known method.

Preferred among them is a polyisocyanate compound having three or more isocyanate groups from the viewpoint of adhesiveness and retort resistance, and is preferably aromatic from the viewpoint of oxygen barrier properties and water vapor barrier properties.

Specific examples of the isocyanate compound include tetramethylene diisocyanate, hexamethylene diisocyanate, toluene diisocyanate, diphenylmethane diisocyanate, hydrogenated diphenylmethane diisocyanate, metaxylylene diisocyanate, hydrogenated xylylene diisocyanate, isophorone diisocyanate, and trimers of these isocyanate compounds, and adducts, burets and allophanates obtained by reacting these isocyanate compounds with low molecular weight active hydrogen compounds or alkylene oxide adducts thereof or high molecular weight active hydrogen compounds.

Examples of the low molecular weight active hydrogen compound include ethylene glycol, propylene glycol, metaxylylene alcohol, 1,3-bishydroxyethyl benzene, 1,4-bishydroxyethyl benzene, trimethylolpropane, glycerol, pentaerythritol, erythritol, sorbitol, ethylenediamine, monoethanolamine, diethanolamine, triethanolamine and metaxylylenediamine, and examples of the molecular active hydrogen compound include polymer active hydrogen compounds of various polyester resins, polyether polyols and polyamides.

The cured product can contain a phosphoric acid-modified compound, and is, for example, a compound represented by the following general formula (5) or (6).

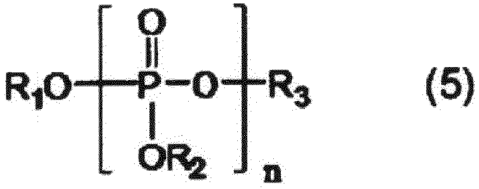

In general formula (5), R₁, R₂, and R₃ are groups selected from a hydrogen atom, an alkyl group having 1 to 30 carbon atoms, a (meth)acryloyl group, an optionally substituted phenyl group, and an alkyl group having 1 to 4 carbon atoms having a (meth) acryloyloxy group, and at least one is a hydrogen atom, and n represents an integer from 1 to 4.

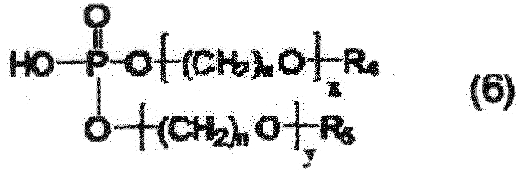

In the formula, R₄ and R₅ are groups selected from a hydrogen atom, an alkyl group having 1 to 30 carbon atoms, a (meth)acryloyl group, an optionally substituted phenyl group, and an alkyl group having 1 to 4 carbon atoms having a (meth)acryloyloxy group, and n represents an integer from 1 to 4, x represents an integer from 0 to 30, and y represents an integer from 0 to 30, excluding the case in which both x and y are 0.

More specific examples include phosphoric acid, pyrophosphoric acid, triphosphoric acid, methyl acid phosphate, ethyl acid phosphate, butyl acid phosphate, dibutyl acid phosphate, 2-ethylhexyl acid phosphate, bis(2-ethylhexyl) phosphate, isododecyl acid phosphate, butoxy ethyl acid phosphate, oleil acid phosphate, tetracosyl acid phosphate, 2-hydroxy ethyl methacyl acid phosphate, polyoxyethylene alkyl ether phosphoric acid, and the like, and one or two or more of these can be used.

The content of the phosphoric acid-modified compound in the resin composition is preferably from 0.005 % by mass to 10 % by mass and more preferably from 0.01 % by mass to 1 % by mass.

By setting the content of the phosphoric acid-modified compound to 0.005 % by mass or more, it is possible to improve the oxygen barrier properties and the water vapor barrier properties of the laminate for a packaging material of the present invention. When the content of the phosphoric acid-modified compound is 10% by mass or less, the adhesive properties of the adhesive layer can be improved.

The resin composition containing the polyester polyol and the isocyanate compound may contain a plate-form inorganic compound, which improves the adhesion of the adhesive layer. Further, it is possible to improve the bending load resistance of the laminate for a packaging material of the present invention.

Examples of the plate-form inorganic compounds include kaolinite-sepentine clay minerals (halloysite, kaolinite, endellite, dickite, nakhlite, antigolite, chrysotile and the like) and pyrophyllite-talc groups (pyrophyllite, talc, kellori, etc.).

Examples of the coupling agent include silane coupling agents, titanium coupling agents, and aluminum coupling agents represented by the following general formula (7). One of these coupling agents may be used alone or two or more are possible in combination.

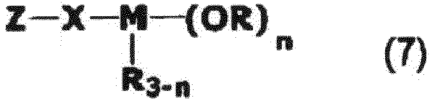

Examples of the silane coupling agents include vinyltrichlorosilane, vinyltrimethoxysilane, vinyltriethoxysilane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloxytrimethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, N-β(aminoethyl)γ-aminopropylmethyldimethoxysilane, N-β(aminoethyl)γ-aminopropyltrimethoxysilane, N-β(aminoethyl)γ-aminopropyltriethoxysilane, γ-aminopropyltrimethoxysilane, γ-aminopropyltriethoxysilane, N-phenyl-γ-aminopropyltrimethoxysilane, γ-chloropropyltrimethoxysilane, γ-mercaptopropyltrimethoxysilane, 3-isocyanatepropyltriethoxysilane, 3-acryloxypropyltrimethoxysilane, and 3-triethoxysilyl-N-(1,3-dimethyl-butylidene).

Examples of the titanium coupling agents include isopropyl triisostearoyl titanate, isopropyl tri(N-aminoethyl-aminoethyl)titanate, isopropyl tridodecyl benzenesulfonyl titanate, isopropyl tris(dioctylpyrophosphate) titanate, tetraoctylbis (didodecylphosphite) titanate, tetraoctylbis(ditridecylphosphite)titanate, bis(dioctylpyrophosphate) oxyacetate titanate, bis(dioctylpyrophosphate)ethylene titanate, isopropyl trioctanoyl titanate, isopropyl dimetacryl isostearoyl titanate, isopropyl isostearoyl diacryl titanate, distearoyl ethylene titanate, isopropyl tri(dioctyl phosphate)titanate, isopropyl tricumyl phenyl titanate, and dicumyl phenyl oxyacetate titanate.

Specific examples of the aluminum coupling agents include acetoalkoxyaluminum diisopropylate, diisopropoxy aluminum ethylacetoacetate, diisopropoxy aluminum monomethacrylate, isopropoxy aluminum alkylacetoacetate mono(dioctyl phosphate), aluminum-2-ethylhexanoate oxide trimer, aluminum stearate oxide trimer, and alkylacetoacetate aluminum oxide trimer.

The resin composition can include a cyclodextrin and / or a derivative thereof, which can improve the adhesion of the adhesive layer. In addition, the bending load resistance of the laminate for a packaging material of the present invention can be further improved.

Specifically, for example, use can be made to cyclodextrins such as cyclodextrin, alkylated cyclodextrin, acetylated cyclodextrin, and hydroxyalkylated cyclodextrin in which a hydrogen atom of a hydroxyl group of a glucose unit is substituted with another functional group. Branched cyclic dextrins may also be used.

The cyclodextrin skeleton in cyclodextrin and a cyclodextrin derivative may be any one of α-cyclodextrin composed of 6 glucose units, β-cyclodextrin composed of 7 glucose units, and γ-cyclodextrin composed of 8 glucose units.

One of these compounds may be used alone or two or more are possible in combination. These cyclodextrins and/or derivatives thereof are sometimes collectively referred to as dextrin compounds.

From the viewpoint of compatibility and dispersibility in the resin composition, it is preferable to use a cyclodextrin derivative as the cyclodextrin compound.

Examples of the alkylated cyclodextrins include methyl-a-cyclodextrin, methyl-β-cyclodextrin, and methyl-γ-cyclodextrin. One of these compounds may be used alone or two or more are possible in combination.

Examples of the acetylated cyclodextrins include monoacetyl-α-cyclodextrin, monoacetyl-β-cyclodextrin and monoacetyl-γ-cyclodextrin. One of these compounds may be used alone or two or more are possible in combination.

Examples of the hydroxyalkylated cyclodextrins include hydroxypropyl-α-cyclodextrin, hydroxypropyl-β-cyclodextrin and hydroxypropyl-γ-cyclodextrin. These compounds may be used alone or in combination of two or more.

The thickness of the adhesive layer is preferably 0.5 µm to 6 µm, more preferably 0.8 µm to 5 µm, and further preferably 1 µm to 4.5 µm.

By setting the thickness of the adhesive layer to 0.5 µm or more, the adhesive properties of the adhesive layer can be improved. When a cured product of a resin composition containing a polyester polyol and an isocyanate compound is used, the bending load resistance of the laminate for packaging material can be improved.

By setting the thickness of the adhesive layer to 6 µm or less, the processability of the laminate for a packaging material can be improved.

The adhesive layer can be formed by being applied and dried on the substrate or the heat-sealable laminate by a conventionally known method such as a direct gravure roll coating method, a gravure roll coating method, a kiss coating method, a reverse roll coating method, a fountain method, and a transfer roll coating method.

### (Gas Barrier Coating Film)

To the extent that the characteristics of the present invention are not impaired, the laminate for a packaging material of the present invention may have a gas barrier coating film containing at least one resin composition such as a hydrolyzed condensate of a metal alkoxide or a hydrolyzed condensate of a metal alkoxide obtained by polycondensing a mixture of a metal alkoxide and a water soluble polymer by a sol-gel method in the presence of a sol-gel method catalyst, water, and an organic solvent, in between any layers.

This can further improve the oxygen barrier properties and the water vapor barrier properties of the laminate for a packaging material of the present invention.

Further, when the vapor-deposited film is composed of an inorganic oxide, cracks in the vapor-deposited film can be effectively prevented from forming by providing the gas barrier coating film adjacent to the vapor-deposited film.

In one embodiment, a metal alkoxide is represented by the following general formula:

R¹ₙM(OR²)ₘ

wherein R¹ and R² each represent an organic group having 1 to 8 carbons, M represents a metal atom, n represents an integer of 0 or greater, m represents an integer of 1 or greater, and n + m represents the valence of M.

Examples of the metal atom M include silicon, zirconium, titanium, and aluminum.

Examples of the organic group represented by R¹ and R² include alkyl groups such as a methyl group, an ethyl group, an n-propyl group, an i-propyl group, an n-butyl group, and an i-butyl group.

Examples of the metal alkoxide satisfying the above general formula include tetramethoxysilane (Si(OCH₃)₄), tetraethoxysilane (Si(OC₂H₅)₄), tetrapropoxysilane (Si(OC₃H₇)₄), and tetrabutoxysilane (Si(OC₄H₉)₄).

A silane coupling agent is preferably used together with the metal alkoxide.

As the silane coupling agent, a known organoalkoxysilane containing an organic reactive group can be used, and particularly, an organoalkoxysilane having an epoxy group is preferred. Examples of the organoalkoxysilane having an epoxy group include γ-glycidoxypropyltrimethoxysilane, γ-glycidoxypropylmethyldiethoxysilane, and β-(3,4-epoxycyclohexyl) ethyltrimethoxysilane.

Two or more kinds of the silane coupling agent may be used, and the silane coupling agent is preferably used in a range of about 1 to 20 parts by mass per 100 parts by mass of the total amount of the alkoxide.

Preferred as the water-soluble polymer are polyvinyl alcohol and ethylene-vinyl alcohol copolymer, and these are preferably used in combination from the viewpoint of oxygen barrier properties, water vapor barrier properties, water resistance and weather resistance.

The content of the water-soluble polymer in the gas barrier coating film is preferably 5 parts by mass to 500 parts by mass with respect to 100 parts by mass of the metal alkoxide.

By setting the content of the water-soluble polymer in the gas barrier coating film to 5 parts by mass or more per 100 parts by mass of the metal alkoxide, it is possible to improve the oxygen barrier properties and the water vapor barrier properties of the laminate for a packaging material of the present invention. In addition, by setting the content of the water-soluble polymer in the gas barrier coating film to 500 parts by mass or less with respect to 100 parts by mass of the metal alkoxide, it is possible to improve the film forming properties of the gas barrier coating film.

The thickness of the gas barrier coating film is preferably 0.01 µm to 100 µm and more preferably 0.1 µm to 50 µm.

By setting the thickness of the gas barrier coating film to 0.01 µm or more, it is possible to improve the oxygen barrier properties and the water vapor barrier properties of the laminate for present invention. In addition, when the film is provided so as to be adjacent to the vapor-deposited film composed of an inorganic oxide, cracks can be prevented from forming in the vapor-deposited film.

In addition, by setting the thickness of the gas barrier coating film to 100 µm or less, it is possible to improve the recyclability and processability of the laminate for a packaging material of the present invention.

The gas barrier coating film can be formed by applying a composition containing the above material onto a substrate by a conventionally known means such as roll coating such as a gravure roll coater, spray coating, spin coating, dipping, a brush, a bar code or an applicator, and then subjecting the composition to polycondensation by a sol-gel method.

Suitable as the sol-gel method catalyst is an acid or an amine compound. The amine compound is preferably a tertiary amine which is substantially insoluble in water and soluble in an organic solvent, and examples thereof include N,N-dimethylbenzylamine, tripropylamine, tributylamine and tripentylamine. Among these, N,N-dimethylbenzyl amine is preferred.

The sol-gel method catalyst is preferably used in a range of 0.01 to 1.0 parts by mass per 100 parts by mass of the metal alkoxide, and more preferably used in a range of 0.03 to 0.3 parts by mass.

When the amount of the sol-gel method catalyst used is 0.01 parts by mass or more per 100 parts by mass of the metal alkoxide, the catalytic effect can be improved.

When the amount of the sol-gel method catalyst used is 1.0 parts by mass or less per 100 parts by mass of the metal alkoxide, the thickness of the gas barrier coating film to be formed can be made uniform.

The composition may further contain an acid. Acids are used as catalysts in sol-gel processes, mainly for hydrolysis of alkoxides and silane coupling agents.

Used as the acid are mineral acids such as sulfuric acid, hydrochloric acid and nitric acid, and organic acids such as acetic acid and tartaric acid.

The amount of the acid to be used is preferably 0.001 to 0.05 mol with respect to the total molar amount of the alkoxide and the alkoxide portion (for example, silicate portion) of the silane coupling agent.

The catalytic effect can be improved by setting the amount of the acid to 0.001 mol or more with respect to the total molar amount of the alkoxide and the alkoxide portion (for example, silicate portion) of the silane coupling agent.

The thickness of the gas barrier coating film to be formed can be made uniform by setting the total molar amount of the alkoxide and the alkoxide portion (for example, silicate portion) of the silane coupling agent to 0.05 mol or less.

The composition preferably contains water at a ratio of 0.1 to 100 moles and more preferably 0.8 to 2 moles, per 1 mole of the total molar amount of the alkoxide.

The oxygen barrier properties and the water vapor barrier properties of the laminate for a packaging material of the present invention can be improved by setting the water content to 0.1 mol or more with respect to the total molar amount of 1 mol of the alkoxide.

Further, the hydrolysis reaction can be carried out rapidly by setting the water content to 100 mol or more with respect to the total molar amount of 1 mol of the alkoxide.

The above composition may also contain an organic solvent. Examples of the organic solvent include methyl alcohol, ethyl alcohol, n-propyl alcohol, isopropyl alcohol, and n-butanol.

One embodiment of a method for forming a gas barrier coating film will be described in the following.

First, a metal alkoxide, a water-soluble polymer, a sol-gel method catalyst, water, an organic solvent and, if necessary, a silane coupling agent are mixed to prepare a composition. Polycondensation reaction gradually proceeds in the composition.

Next, the composition is applied and dried on the substrate by the above-described conventionally known method.

By this drying, the polycondensation reaction of the alkoxide and the water-soluble polymer (in the case where the composition contains a silane coupling agent, then the silane coupling agent as well) further proceeds to form a composite polymer layer.

Finally, the composition is heated at a temperature of 20 to 250 °C and preferably 50 to 220 °C, for 1 second to 10 minutes to form a gas barrier coating film.

### (Intermediate Layer)

The laminate for a packaging material according to the present invention can be provided with an intermediate layer between the substrate and the heat seal layer. Thus, the strength of the laminate for a packaging material of the present invention can be improved.

The intermediate layer is made of the same material as that of the substrate and the heat seal layer, i.e., polyolefin.

The intermediate layer is subjected to a stretching treatment in the same manner as the substrate.

Stretching of the intermediate layer may be a uniaxial stretching or a biaxial stretching. Preferable stretching magnification ratios, etc. are as described above.

The thickness of the intermediate layer is preferably 10 µm to 50 µm and more preferably 12 µm to 30 µm. By setting the thickness of the intermediate layer to 10 µm or more, the strength of the laminate for a packaging material of the present invention can be further improved. By setting the thickness of the intermediate layer to 50 µm or less, the processability of the laminate for a packaging material of the present invention can be improved.

In one embodiment, the intermediate layer may comprise a vapor-deposited film. As a result, the gas barrier properties, particularly the oxygen barrier properties and the water vapor barrier properties, of the laminate for a packaging material of the present invention can be improved further. Preferred aspects of the vapor-deposited film are as described above.

In one embodiment, the intermediate layer may comprise a gas barrier coating film containing at least one resin composition such as a hydrolyzed condensate of a metal alkoxide or a hydrolyzed condensate of a metal alkoxide obtained by polycondensing a mixture of a metal alkoxide and a water-soluble polymer by a sol-gel method in the presence of a sol-gel method catalyst, water and an organic solvent.

Thus, the oxygen barrier properties and the water vapor barrier properties of the laminate for a packaging material of the present invention can be improved further.

Further, in the case where the vapor-deposited film is composed of an inorganic oxide, cracks in the vapor-deposited film can be effectively prevented by providing the gas barrier coating film adjacent to the vapor-deposited film.

Preferred embodiments of the gas barrier coating film are as described above.

### ((3) Laminated Substrate)

As shown in FIG. 6, a laminated substrate 20 of the present invention is characterized by comprising a substrate body 21 and a barrier coating layer 22, wherein the substrate body is a stretched resin film composed of polyolefin.

In one embodiment, the laminated substrate of the present invention comprises a vapor-deposited film between the substrate body and the barrier coating layer.

In the present invention, the thickness of the barrier coating layer is preferably smaller than the thickness of the substrate body. Such a structure can improve the recyclability of the laminate for a packaging material when the laminated substrate of the present invention is used as a substrate for a laminate for a packaging material comprising a polyolefin sealant layer.

The thickness of the barrier coating layer is preferably smaller by 5 µm or more and more preferably 10 µm or more than the thickness of the substrate body. When the thickness of the barrier coating layer is smaller than the thickness of the substrate body by 5 µm or more, it is possible to improve the recyclability of the laminate for packaging material.

### (Substrate body)

The substrate body is composed of polyolefin, and examples thereof include polyethylene, polypropylene, polymethylpentene, an ethylene-propylene copolymer and a propylene-butene copolymer, among which polyethylene and polypropylene are preferred.

Polyethylene includes high-density polyethylene (HDPE) with a density greater than 0.945 g/cm³, medium-density polyethylene (MDPE) with a density between 0.925 and 0.945 g/cm³, low-density polyethylene (LDPE) with a density less than 0.925 g/cm³, and linear low-density polyethylene (LLDPE).

In one embodiment, the substrate body can comprise a layer comprising high-density polyethylene (hereinafter referred to as a high-density polyethylene layer) and a layer comprising medium-density polyethylene (hereinafter referred to as a medium-density polyethylene layer).

By providing the high-density polyethylene layer, it is possible to improve strength and heat resistance of the laminated substrate of the present invention. Further, by providing the medium-density polyethylene layer, it is possible to improve the stretching properties of the resin film when the substrate body is produced.

For example, the substrate body has a structure comprising a high-density polyethylene layer and a medium-density polyethylene layer. With such a structure, it is possible to improve the stretching properties of the resin film when the substrate body is produced. In addition, strength and heat resistance of the substrate of the present invention can be improved. When the laminated substrate having such structure is applied to the laminate for a packaging material, the high-density polyethylene layer is located on the outermost surface.

In this case, the thickness of the high-density polyethylene layer is preferably smaller than the thickness of the medium-density polyethylene layer.

The ratio of the thickness of the high-density polyethylene layer to the thickness of the medium-density polyethylene layer is preferably 1/10 to 1/1 and more preferably 1/5 to 1/2.

By setting the ratio of the thickness of the high-density polyethylene layer to the thickness of the medium-density polyethylene layer to 1/10 or more, strength and heat resistance of the laminated substrate of the present invention can be improved. Further, by setting the ratio of the thickness of the high-density polyethylene layer to the thickness of the medium-density polyethylene layer to 1/1 or less, it is possible to improve the stretching properties of the resin film when the substrate body is produced.

Further, the substrate body can have, for example, the structure comprising a high-density polyethylene layer / medium-density polyethylene layer / high-density polyethylene layer.

With such a structure, it is possible to improve the stretching properties of the resin film when the substrate body is produced. In addition, strength and heat resistance of the substrate of the present invention can be improved. Further, the substrate body can be prevented from curling.

In this case, the thickness of the high-density polyethylene layer is preferably smaller than the thickness of the medium-density polyethylene layer.

The ratio of the thickness of the high-density polyethylene layer to the thickness of the medium-density polyethylene layer is preferably 1/10 to 1/1 and more preferably 1/5 to 1/2.

By setting the ratio of the thickness of the high-density polyethylene layer to the thickness of the medium-density polyethylene layer to 1/10 or more, strength and heat resistance of the laminated substrate of the present invention can be improved. Further, by setting the ratio of the thickness of the high-density polyethylene layer to the thickness of the medium-density polyethylene layer to 1/1 or less, it is possible to improve the stretching properties of the resin film when the substrate body is produced.

Further, the substrate body can have, for example, the structure comprising from the outside, a high-density polyethylene layer / medium-density polyethylene layer / low-density polyethylene layer or a linear low-density polyethylene layer / medium-density polyethylene layer / high-density polyethylene layer.

With such a structure, it is possible to improve the stretching properties of the resin film when the substrate body is produced. In addition, strength and heat resistance of the substrate of the present invention can be improved. In addition, curling can be prevented.

In this case, the thickness of the high-density polyethylene layer is preferably smaller than the thickness of the medium-density polyethylene layer.

The ratio of the thickness of the high-density polyethylene layer to the thickness of the medium-density polyethylene layer is preferably 1/10 to 1/1 and more preferably 1/5 to 1/2.

By setting the ratio of the thickness of the high-density polyethylene layer to the thickness of the medium-density polyethylene layer to 1/10 or more, strength and heat resistance of the laminated substrate of the present invention can be improved. Further, by setting the ratio of the thickness of the high-density polyethylene layer to the thickness of the medium-density polyethylene layer to 1/1 or less, it is possible to improve the stretching properties of the resin film when the substrate body is produced.

The thickness of the high-density polyethylene layer is preferably smaller than the thickness of the low-density polyethylene layer or the linear low-density polyethylene layer.

The ratio of the thickness of the high-density polyethylene layer to the thickness of the low-density polyethylene layer or the linear low-density polyethylene layer is preferably 1/10 to 1/1 and more preferably 1/5 to 1/2.

By setting the ratio of the thickness of the high-density polyethylene layer to the thickness of the low-density polyethylene layer or the linear low-density polyethylene layer to 1/10 or more, heat resistance of the laminated substrate of the present invention can be improved. Further, by setting the ratio of the thickness of the high-density polyethylene layer to the thickness of the low-density polyethylene layer or the linear low-density polyethylene layer to 1/1 or less, processability of the resin film can be improved.

Polypropylene may be a homopolymer, a random copolymer or a block copolymer.

A polypropylene homopolymer is a polymer of only propylene, a polypropylene random copolymer is a random copolymer of propylene and α-olefin other than propylene (for example, ethylene, butene-1,4-methyl-1-pentene, etc.), and a polypropylene block copolymer is a copolymer having a polymer block consisted of propylene and a polymer block consisted of another α-olefin than propylene as above.

Preferably used among these are a homopolymer or a random copolymer from the viewpoint that they are capable of improving transparency of the substrate body and improving visibility when an image is formed on the heat seal layer side surface of the substrate body. When rigidity and heat resistance of the laminated substrate are important, a homopolymer can be used, and when the impact resistance is important, a random copolymer can be used.

As a raw material for obtaining polyolefin, an olefin monomer derived from biomass may be used instead of an olefin monomer obtained from fossil fuel. Since such a biomass-derived olefin monomer is a carbon-neutral material, it is possible to produce a packaging material with less environmental burden when the laminated substrate of the present invention is used as the substrate of the laminate for a packaging material and the packaging material is produced.

Polyolefin recycled by mechanical recycling can also be used.

To the substrate is used a stretched resin film composed of polyolefin in order to provide strength and heat resistance as a packaging material. The stretched resin film may be either a uniaxially stretched resin film or a biaxially stretched resin film.

The stretching magnification ratio in the machine direction (MD) of the stretched resin film is preferably from 2 times to 10 times and preferably from 3 times to 7 times.

By setting the stretching magnification ratio in the machine direction (MD) of the stretched resin film to be 2 times or more, strength and heat resistance of the laminated substrate of the present invention can be improved. Further, since transparency of the substrate body can be improved, visibility from the back surface can also be improved when an image is formed on the surface of the substrate body. On the other hand, the upper limit of the stretching magnification ratio in the machine direction (MD) of the stretched resin film is not particularly limited, and is preferably 10 times or less from the viewpoint of the breaking limit of the stretched film.

The stretching magnification ratio of the stretched resin film in the transverse direction (TD) is preferably from 2 times to 10 times and preferably from 3 times to 7 times.

By setting the stretching magnification ratio of the stretched resin film in the transverse direction (TD) to be 2 times or more, strength and heat resistance of the substrate body of the present invention can be improved. Further, since transparency of the substrate body can be improved, visibility from the back surface can also be improved when an image is formed on the surface of the substrate body. On the other hand, the upper limit of the stretching magnification ratio of the stretched resin film in the transverse direction (TD) is not particularly limited, and is preferably 10 times or less from the viewpoint of the breaking limit of the stretched film.

The substrate body may have an image formed on its surface. The image to be formed is not particularly limited, and characters, patterns, symbols, combinations thereof, and the like are formed.

The image can be formed using a known ink, but it is preferable to use a biomass - derived ink from the viewpoint of environmental impact.

The substrate body is preferably subjected to the above-described surface treatment. This can improve adhesion with the adjacent layers.

An anchor coating layer may be formed on the surface of the substrate body using a conventionally known anchor coating agent.

The thickness of the substrate body is preferably 5 µm to 300 µm and more preferably 7 µm to 100 µm.

By setting the thickness of the substrate body to 5 µm or more, strength of the laminated substrate of the present invention can be improved. In addition, by setting the thickness of the substrate body to 300 µm or less, the processability of the laminate for a packaging material can be improved when the laminated substrate of the present invention is used as the substrate of the laminate for packaging material.

The substrate body can be produced by forming a polyolefin film by the T-die method or an inflation method, producing a resin film, and then stretching the resin film.

According to the inflation method, film formation and stretching can be performed simultaneously.

When the substrate body is produced by the T-die method, MFR of the polyolefin is preferably 5 g/10 min to 20 g/10 min.

By setting the MFR of the polyolefin to 5 g/10 min or more, processability of the laminated substrate of the present invention can be improved. Further, by setting the MFR of the polyolefin to 20 g/10 min or less, it is possible to prevent the resin film from being broken.

When the substrate body is produced by the inflation method, MFR of the polyolefin is preferably 0.5 g/10 min to 5 g/10 min.

By setting the MFR of the polyolefin to 0.5 g/10 min or more, processability of the laminated substrate of the present invention can be improved. Film forming properties can be improved by setting the MFR of the polyolefin to 5 g/10 min or less.

The substrate body is not limited to the substrate body produced by the above method, and a commercially available substrate body may be used.

### (Barrier Coating Layer)

The substrate is provided with a barrier coating layer on the surface of the substrate body, whereby the barrier properties specifically, the oxygen barrier properties and the water vapor barrier properties of the laminated substrate of the present invention can be improved.

In one embodiment, the barrier coating layer comprises gas barrier resins such as ethylene-vinyl alcohol copolymer (EVOH), polyvinyl alcohol, polyacrylonitrile, polyamides such as nylon 6, nylon 6,6 and polymethaxylylene adipamide (MXD6), polyester, polyurethane, and (meth)acrylic resins.

Preferred among these is EVOH from the viewpoints of oxygen barrier properties and water vapor barrier properties. The ethylene content in the EVOH is preferably 20 % by mass to 60 % by mass and more preferably 27 % by mass to 48 % by mass.

By setting the ethylene content in the EVOH to 20 % by mass or more, the processability of the laminated substrate can be improved. By setting the ethylene content in the EVOH to 60 % by mass or less, the oxygen barrier properties and the water vapor barrier properties of the laminated substrate can be improved.

The content of the gas barrier resin in the barrier coating layer is preferably 50 % by mass to 95 % by mass and more preferably 75 % by mass to 90 % by mass. By setting the content of the gas barrier resin in the barrier coating layer to 50% by mass or more, the oxygen barrier properties and the water vapor barrier properties of the laminated substrate of the present invention can be further improved.

The barrier coating layer may contain additives as long as the characteristics of the present invention are not impaired. Examples of the additives include a crosslinking agent, an antioxidant, an anti-blocking agent, a slip agent, an ultraviolet absorber, a light stabilizer, a filler, a reinforcing agent, an antistatic agent, a compatibilizer and a pigment.

The thickness of the barrier coating layer is preferably 0.01 µm to 10 µm and more preferably 0.1 µm to 5 µm.

By setting the thickness of the barrier coating layer to 0.01 µm or more, it is possible to further improve the oxygen barrier properties and the water vapor barrier properties of the laminated substrate of the present invention. By setting the thickness of the barrier coating layer to 10 µm or less, it is possible to improve recyclability of the laminate for a packaging material when the laminated substrate of the present invention is used as the substrate for the laminate for a packaging material.

The barrier coating layer can be formed by dissolving or dispersing the above-mentioned material in water or a suitable solvent, and coating and drying the resultant on the polyolefin resin layer. The barrier coating layer can also be formed by applying and drying a commercially available barrier coating agent on the substrate body.

In another embodiment, the barrier coating layer is a gas barrier coating film containing at least one resin composition such as a hydrolyzed condensate of a metal alkoxide or a hydrolyzed condensate of a metal alkoxide obtained by polycondensing a mixture of a metal alkoxide and a water-soluble polymer by a sol-gel method in the presence of a sol-gel method catalyst, water and an organic solvent.

Since the barrier coating film has been described above, the description thereof is omitted here.

### (Vapor-deposited film)

In one embodiment, the laminated substrate of the present invention may further comprise a vapor-deposited film between the substrate body and the barrier coating layer. By providing the vapor-deposited film, the oxygen barrier properties and the water vapor barrier properties can be further improved. Preferred aspects of the vapor-deposited film are as described above.

### ((4) Laminate for Packaging Materials)

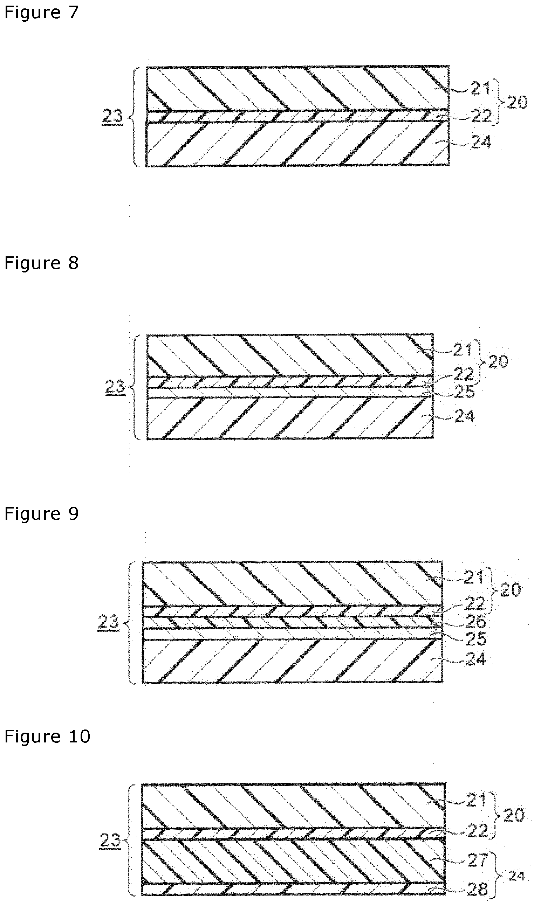

As shown in FIG. 7, a laminate for a packaging material 23 of the present invention comprises a laminated substrate 20 and a heat seal layer 24.

In the present invention, the heat seal layer is composed of polyolefin, and the polyolefin composing the substrate body of the laminated substrate and the polyolefin composing the heat seal layer are the same polyolefin. With such a feature, it is possible to improve recyclability of the laminate for a packaging material.

Further, in one embodiment, as shown in FIG. 8, a laminate for a packaging material 23 of the present invention can comprise a vapor-deposited film 25 between the laminated substrate 20 and the heat seal layer 24.

In one embodiment, as shown in FIG. 9, the laminate for a packaging material 23 of the present invention can include an adhesive layer 26 between the laminated substrate 20 and the vapor-deposited film 25.

Further, in one embodiment, as shown in FIG. 10, in the laminate for a packaging material 20 of the present invention, the heat seal layer 24 can include a first heat seal layer 27 and a second heat seal layer 28.

An intermediate layer may be provided between the laminated substrate and the heat seal layer. Since the configuration of the intermediate layer has been described above, the description thereof is omitted here.

The content of the same polyolefin in the entire laminate for a packaging material of the present invention is preferably 80% by mass or more and more preferably 90% by mass or more.

By setting the content of the same polyolefin in the entire laminate for a packaging material of the present invention to 80% by mass or more, recyclability of the laminate for a packaging material of the present invention can be improved.

The content of the same polyolefin in the laminate for packaging material means the ratio of the content of the same polyolefin to the sum of the content of the resin material in each layer composing the laminate.

Each layer composing the laminate for a packaging material of the present invention will be described in the following.

### (Laminated Substrate)

In a laminate for a packaging material, a laminated substrate is provided so that the substrate body is the outermost surface. The details of the structure of the laminated substrate are omitted here because they have been described above.

### (Heat Seal Layer)

The heat seal layer is characterized in that the heat seal layer is composed of the same polyolefin as the polyolefin composing the substrate body of the above-described laminated substrate. With such a feature, it is possible to make a recyclable packaging material while maintaining strength and heat resistance as a packaging material.

However, the heat seal layer is formed by an unstretched polyolefin resin film or by melt extrusion of polyolefin.

When polypropylene is used as the heat seal layer, the above-described heat seal modifier may be contained in order to improve the heat sealing properties.

The thickness of the heat seal layer is preferably 5 µm to 100 µm and more preferably 10 µm to 50 µm.

By setting the thickness of the heat seal layer to 5 µm or more, the heat sealing properties and recycling properties of the heat seal layer can be improved. Further, by setting the thickness of the heat seal layer to 100 µm or less, the processability of the laminate for a packaging material of the present invention can be improved.

In one embodiment, the heat seal layer may have a multi-layer structure. In particular, in the case where a heat seal modifier is added to the heat seal layer of polypropylene, the modifier may migrate (leach out) to the laminated substrate side, so that the heat seal layer may be composed of two or more layers, the heat seal side (innermost layer side of the laminate) may be a layer containing a polyolefin resin and the heat seal modifier, and the outer layer may be a layer made of polypropylene.

### (Vapor-deposited film)

The laminate for a packaging material of the present invention may further comprise a vapor-deposited film between the substrate and the heat seal layer. By providing the vapor-deposited film, the oxygen barrier properties and the water vapor barrier properties can be further improved. Preferred embodiments of the vapor-deposited film are as described above.

### (Adhesive Layer)

The laminate for a packaging material of the present invention may comprise an adhesive layer for the purpose of improving adhesion between the surface on which the vapor-deposited film is provided and the surface to be adhered with the vapor-deposited film (adhered surface). That is, when the vapor-deposited film is provided on the surface of the heat seal layer, an adhesive layer can be provided between the vapor-deposited film and the substrate (barrier coat layer). Preferred embodiments of the adhesive layer are as described above.

### ((5) Laminate for Packaging Materials)

The laminate for a packaging material according to the present invention comprises a laminated substrate and a heat-sealing laminate, wherein
the laminated substrate comprises a substrate body and a barrier coating layer; and
the heat-sealing laminate comprises a vapor-deposited film and a heat seal layer.

In addition, in one embodiment of the present invention, the laminated substrate may comprise a vapor-deposited film between the substrate body and the barrier coating layer.

Further, in one embodiment of the present invention, the laminate for a packaging material may comprise an adhesive layer between the laminated substrate and the heat-sealing laminate.

In one embodiment of the present invention, the heat seal layer of the laminate for a packaging material may comprise a first heat seal layer and a second heat seal layer.

The content of the same polyolefin in the entire laminate for a packaging material of the present invention is preferably 80% by mass or more and more preferably 90% by mass or more.

By setting the content of the same polyolefin in the entire laminate for a packaging material of the present invention to 80% by mass or more, recyclability of the laminate for a packaging material of the present invention can be improved.

The content of the same polyolefin in the laminate for packaging material means the proportion of the content of the same polyolefin to the sum of the content of the resin material in each layer composing the laminate.

Each layer composing the laminate for a packaging material of the present invention is as described above, and therefore the description is omitted here.

### ((6) Laminate for Packaging Material)

The laminate for a packaging material according to the present invention is characterized by comprising a laminated substrate comprising a substrate body and a first vapor-deposited film; an adhesive layer; and a heat-sealable laminate comprising a second vapor-deposited film and a heat seal layer.

In one embodiment of the present invention, the laminated substrate may also comprise a barrier coating layer on the first vapor-deposited film.

In one embodiment of the present invention, the heat seal layer of the laminate for a packaging material may comprise a first heat seal layer and a second heat seal layer.

The content of the same polyolefin in the entire laminate for a packaging material of the present invention is preferably 80% by mass or more, and more preferably 90% by mass or more.

By setting the content of the same polyolefin in the entire laminate for a packaging material of the present invention to 80% by mass or more, it is possible to improve recyclability of the laminate for a packaging material of the present invention.

The content of the same polyolefin in the laminate for packaging material means the proportion of the content of the same polyolefin to the sum of the content of the resin material in each layer constituting the laminate.

Since the respective layers composing the laminate for a packaging material of the present invention have been described above, description thereof is omitted here. The first and the second vapor-deposited films may have the same compositions and thicknesses or may have different compositions and thicknesses.

### ((7) Laminate for Gas Barrier Intermediate Layer)

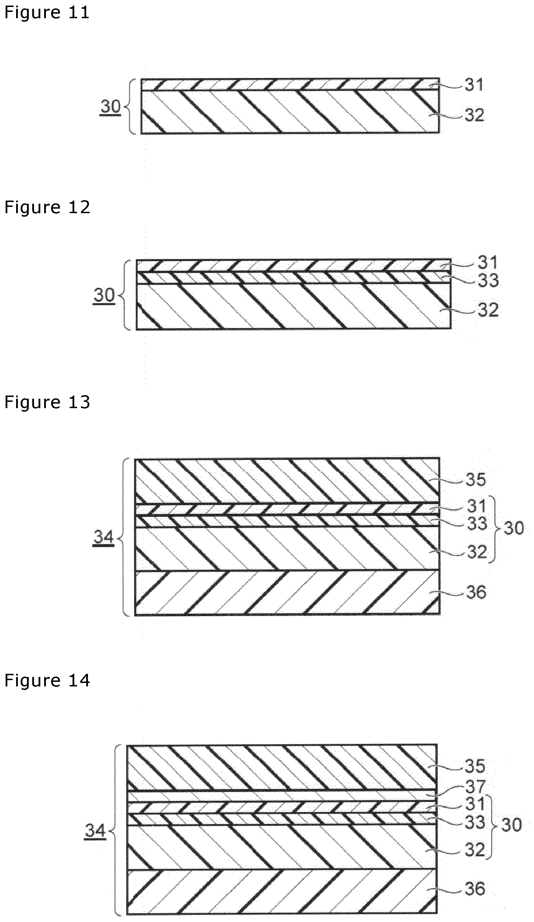

As shown in FIG. 11, a laminate for a gas barrier intermediate layer 30 of the present invention includes a gas barrier resin layer 31 and a polyolefin resin layer 32.

In one embodiment, as shown in FIG. 12, the laminate for a gas barrier intermediate layer 30 may include an adhesive resin layer 33 between the gas barrier resin layer 31 and the polyolefin resin layer 32.

By further providing an adhesive resin layer between the gas barrier resin layer and the polyolefin resin layer, adhesion between these layers can be further improved.

In the present invention, the thickness of the gas barrier resin layer is preferably smaller than the thickness of the polyolefin resin layer. Such a structure can improve recyclability of the laminate for a packaging material when the gas barrier laminate of the present invention is used as the intermediate layer of the laminate for a packaging material.

The thickness of the gas barrier resin layer is preferably smaller by 5 µm or more and more preferably 10 µm or more than the thickness of the polyolefin resin layer. When the thickness of the gas barrier resin layer is smaller than the thickness of the polyolefin resin layer by 5 µm or more, the recyclability of the laminate for packaging material can be further improved.

The gas barrier laminate is composed of a stretched resin film, and the stretched resin film may be a uniaxially stretched resin film or a biaxially stretched resin film.

The stretching magnification ratio in the machine direction (MD) of the stretched resin film is preferably from 2 times to 10 times and preferably from 3 times to 7 times.

By setting the stretching magnification ratio in the machine direction (MD) of the stretched resin film to be 2 times or more, strength can be improved while maintaining the oxygen barrier properties and the water vapor barrier properties of the gas barrier laminate of the present invention. On the other hand, the upper limit of the stretching magnification ratio in the machine direction (MD) of the stretched resin film is not particularly limited, and is preferably 10 times or less from the viewpoint of the breaking limit of the stretched resin film.

The stretching magnification ratio of the stretched resin film in the transverse direction (TD) is preferably from 2 times to 10 times and preferably from 3 times to 7 times.

By setting the stretching magnification ratio of the stretched resin film in the transverse direction (TD) to 2 times or more, strength can be improved while maintaining the oxygen barrier properties and the water vapor barrier properties of the gas barrier laminate of the present invention. On the other hand, the upper limit of the stretching magnification ratio of the stretched resin film in the transverse direction (TD) is not particularly limited, and is preferably 10 times or less from the viewpoint of the breaking limit of the stretched resin film.

### (Gas Barrier Resin Layer)

The gas barrier resin layer composing the gas barrier laminate of the present invention contains at least one gas barrier polymer, and examples thereof include an ethylene-vinyl alcohol copolymer (EVOH), polyvinyl alcohol, polyacrylonitrile, polyamides such as nylon 6, nylon 6,6 and polymethaxylylene adipamide (MXD6), polyester, polyurethane, and (meth)acrylic resins.

The ethylene content in EVOH is preferably 20 % by mass to 60 % by mass and more preferably 27 % by mass to 48 % by mass.

By setting the ethylene content in EVOH to 20 % by mass or more, it is possible to improve the processability of the gas barrier laminate of the present invention. By setting the ethylene content in EVOH to 60 % by mass or less, it is possible to improve the oxygen barrier properties and the water vapor barrier properties of the gas barrier laminate of the present invention.

The content of the gas barrier resin in the gas barrier resin layer is preferably 50% by mass or more and more preferably 75% by mass or more.

By setting the content of the gas barrier resin in the gas barrier resin layer to 50% by mass or more, it is possible to improve the oxygen barrier properties and the water vapor barrier properties of the gas barrier laminate of the present invention further.

The gas barrier resin layer may contain an additive within a range that does not impair the characteristics of the present invention. Examples of the additives include a crosslinking agent, an antioxidant, an anti-blocking agent, a slip agent, an ultraviolet absorber, a light stabilizer, a filler, a reinforcing agent, an antistatic agent, a compatibilizer, and a pigment.

The thickness of the gas barrier resin layer is preferably 0.5 µm to 10 µm and more preferably 1 µm to 7 µm.

By setting the thickness of the gas barrier resin layer to 0.5 µm or more, it is possible to improve oxygen barrier properties and water vapor barrier properties of the gas barrier laminate of the present invention. Further, by setting the thickness of the gas barrier resin layer to 10 µm or less, it is possible to improve recyclability of the laminate for a packaging material when the gas barrier laminate of the present invention is used as an intermediate layer of the laminate for a packaging materia.

### (Polyolefin Resin Layer)

A polyolefin resin layer is made of polyolefin, and examples thereof include polyethylene, polypropylene, polymethylpentene, an ethylene-propylene copolymer and a propylene-butene copolymer, among which polyethylene and polypropylene are preferred.

The thickness of the polyolefin resin layer is preferably 5 µm to 100 µm and more preferably 10 µm to 50 µm.

By setting the thickness of the polyolefin resin layer to 5 µm or more, it is possible to improve strength and heat resistance of the gas barrier laminate of the present invention. Further, it is possible to improve recyclability of the laminate for a packaging material when the gas barrier laminate of the present invention is used as an intermediate layer of the laminate for a packaging material.

By setting the thickness of the polyolefin resin layer to 100 µm or less, processability of the gas barrier laminate of the present invention can be improved.

### (Adhesive Resin Layer)

In one embodiment, the gas barrier laminate may comprise an adhesive resin layer between the gas barrier resin layer and the polyolefin resin layer. Thus, adhesion between the gas barrier resin layer and the polyolefin resin layer can be improved.

The adhesive resin layer comprises at least one resin material, such as polyolefin, modified polyolefin, polyester, a vinyl resin and polyamide. Among these, polyolefin and modified polyolefin are preferable from the viewpoint of adhesion.

The adhesive resin layer may contain the above-mentioned additives within a range that does not impair the characteristics of the present invention.

The thickness of the adhesive resin is preferably 0.5 µm to 10 µm and more preferably 1 µm to 5 µm.

By setting the thickness of the adhesive resin layer to 0.5 µm or more, it is possible to improve adhesion between the gas barrier resin layer and the polyolefin resin layer. Further, by setting the thickness of the adhesive resin layer to 10 µm or less, it is possible to improve recyclability of the laminate for a packaging material when the gas barrier laminate of the present invention is used as a composing layer of the laminate for a packaging material.

The gas barrier laminate is a co-extruded stretched film produced by stretching a film obtained by co-extrusion of a material composing the gas barrier layer and a material composing the polyolefin layer (and if an adhesive layer is provided, then also a material composing the adhesive layer) by a conventionally known process such as the T-die method or the inflation method.

### ((8) Laminate for a Packaging Material)

As shown in FIG. 13, a laminate for a packaging material 34 of the present invention comprises a substrate 35, the laminate for a gas barrier intermediate layer 30, and a heat seal layer 36.

The substrate 35 and the heat seal layer 36 are composed of the same polyolefin as that composing the polyolefin resin layer 32 of the laminate for a gas barrier intermediate layer 30.

As the substrate, the substrate and the laminated substrate can be used, and as the heat seal layer, the heat seal layer and the heat seal laminate can be used.

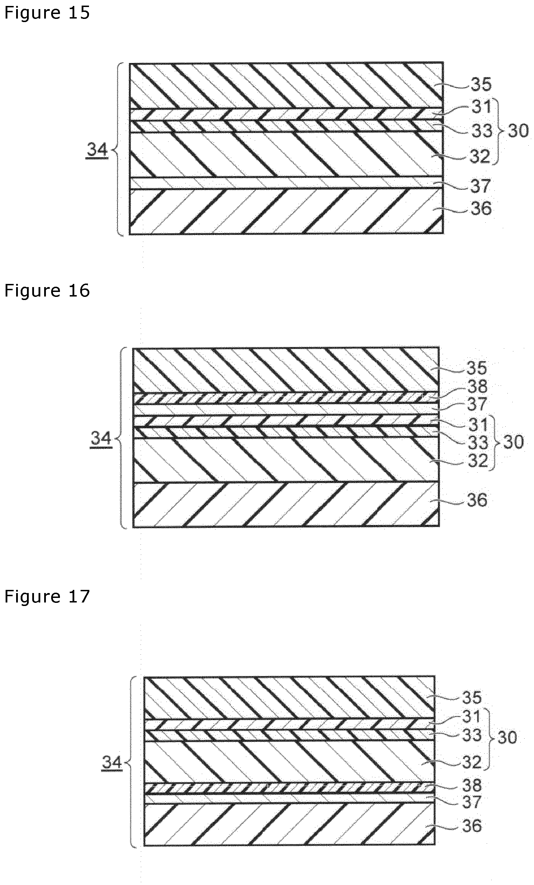

In one embodiment, as shown in FIGS. 14 and 15, the laminate for a packaging material 34 of the present invention can comprise a vapor-deposited film 37 at least either between the substrate 35 and the laminate for a gas barrier intermediate layer 30 or between the laminate for a gas barrier intermediate layer 30 and the heat seal layer 36.

In one embodiment, the laminate for a packaging material 34 of the present invention may comprise an adhesive layer 38 between the substrate 35 and the vapor-deposited film 37 as shown in FIG. 16, or between the laminate for a gas barrier intermediate layer 30 and the vapor-deposited film 37 as shown in FIG. 17.

In one embodiment, the heat seal layer 36 of the laminate for a packaging material 34 of the present invention may include a first heat seal layer and a second heat seal layer (not illustrated).

Further, in one embodiment of the present invention, the laminate for a packaging material may include a gas barrier coating film between any layers (not illustrated).

The content of polyolefin in the entire laminate for a packaging material of the present invention is preferably 80% by mass or more and more preferably 90% by mass or more.

By setting the polyolefin content in the entire laminate for a packaging material of the present invention to 80% by mass or more, it is possible to improve recyclability of the laminate for a packaging material of the present invention.

The polyolefin content in the laminate for a packaging material means the proportion of the polyolefin content to the sum of the resin material content in each layer constituting the laminate for a packaging material.

The respective layers composing the laminate for a packaging material of the present invention are the same as those described above, and therefore the description is omitted here.

### (Packaging Material)

A packaging material of the present invention is composed of the above-described laminate for a packaging material.

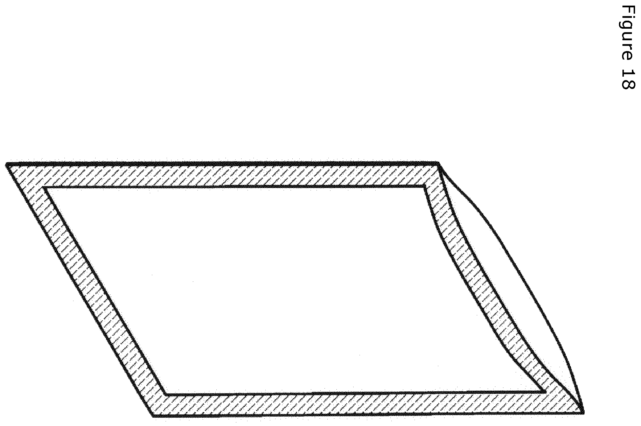

The shape of the packaging material is not particularly limited, and may be a bag-form shape as shown in FIG. 18.

In one embodiment, the bag-form packaging material may be produced by folding the laminate of the present invention in two and overlaying it so that the heat seal layer is inside, and heat-sealing the ends thereof.

In another embodiment, the bag-form packaging material can also be produced by stacking two laminates with heat seal layers facing each other and heat-sealing the ends thereof.

In the figure, the shaded area represents the heat seal portion.

The method of heat-sealing is not particularly limited, and can be performed by a known method such as a bar seal, a rotating roll seal, a belt seal, an impulse seal, a high frequency seal, an ultrasonic seal, and the like.

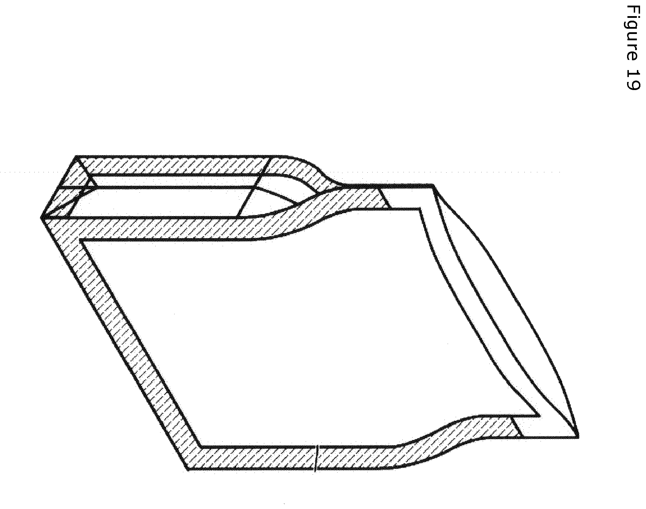

Also, in one embodiment, the packaging material has a stand pouch-form shape with a trunk part and a bottom part as shown in FIG. 19.

The stand pouch-form packaging material can be produced by heat-sealing the laminate for a packaging material in a tubular shape so that the heat seal layer is inside, thereby forming a trunk part, and then folding another laminate for a packaging material in a V-shape so that the heat seal layer is inside and sandwiching the laminate from one end of the trunk part, and heat-sealing the laminate to form a bottom part.

The content to be filled in the packaging material is not particularly limited, and the content may be a liquid, a powder and a gel. It may or may not be a food product.

After the content is filled, the opening is heat-sealed to form a package.

### EXAMPLES

The present invention will now be described in more detail with reference to the Examples; however the present invention shall not be limited to these Examples.

### Example 1-1

An ethylene-vinyl alcohol copolymer (EVOH, manufactured by Kuraray K.K., product name: EVAL E171B, density: 1.14 g/cm³, melting point: 165 °C, MFR: 1.7 g/10 min, ethylene content: 44% by mass) composing the gas barrier resin layer;
polyolefin (product name: Admer QF551, manufactured by Mitsui Chemicals K.K.; density: 0.89 g/cm³; melting point: 135 °C; MFR: 2.5 g/10 min) composing the adhesive resin layer;
polypropylene (product name: FL7540L, manufactured by TPC K.K.; density: 0.90 g/cm³, melting point: 138 °C, MFR:7.0 g/10 min) composing the first heat seal layer; and
a mixture of polypropylene (product name: FL7540L, manufactured by TPC K.K.; density: 0.90 g/cm³, melting point: 138°C; MFR:7.0 g/10 min) and a heat seal modifier (product name: Tafmer A-4085S, manufactured by Mitsui Chemicals K.K.; density: 0.885 g/cm³, melting point: 66 °C, MFR: 3.6 g/10 min) (polypropylene: heat seal modifier = 60:40 (by mass)) composing the second heat seal layer;
were co-extruded by the T-die method, to give a heat-sealable laminate having a structure comprising a gas-barrier resin layer (2 µm), an adhesive resin layer (3 µm) / a first heat seal layer (15 µm), and a second heat seal layer (10 µm).

An aluminum vapor-deposited film having a thickness of 30 nm was formed by the PVD method on the gas barrier resin layer provided in the heat-sealable laminate produced as described above. The deposition concentration (OD value) of the formed vapor-deposited film was determined as 3.0.

A biaxially stretched polypropylene film (product name: P2108, manufactured by Toyobo K.K.) having a thickness of 25 µm was prepared as a substrate.

An image was formed on one side of the biaxially stretched polypropylene film by a gravure printing method using a solvent type gravure ink (FINATO, manufactured by DIC Graphics K.K.).

The surface to which the aluminum vapor-deposited film is formed of the heat-sealable laminate and the surface to which the image is formed of the substrate were laminated through a two-part curing polyurethane adhesive (product name: RU-3600 / H-689, manufactured by Rock Paint K.K.) to obtain a laminate for a packaging material of the present invention. The proportion of the same polyolefin (PP) in the laminate for a packaging material thus obtained was 84% by mass.

### Example 1-2

A laminate for a packaging material of the present invention was prepared in the same manner as in Example 1-1, except that the thickness of the aluminum vapor-deposited film was changed to 20 nm and the OD value of the vapor-deposited film was changed to 2.0. The proportion of the same polyolefin (PP) in the laminate for a packaging material thus obtained was 84% by mass.

### Example 1-3

A laminate for a packaging material of the present invention was prepared in the same manner as in Example 1-1, except that the two-part curing polyurethane adhesive was changed to a two-part curing adhesive comprising a polyester polyol, an isocyanate compound, and a phosphoric acid-modified compound (manufactured by DIC Corporation, product name: PASLIM VM001/VM102CP). The proportion of the same polyolefin (PP) in the laminate for a packaging material thus obtained was 84% by mass.

### Comparative Example 1-1

A laminate for a packaging material was obtained in the same manner as in Example 1-1, except that an unstretched polypropylene film (product name: P1108, manufactured by Toyobo K.K.) having a thickness of 25 µm was used as a substrate. The proportion of the same polyolefin (PP) in the laminate for a packaging material thus obtained was 84% by mass.

### Comparative Example 1-2

Polypropylene (product name: FL7540L, manufactured by TPC K.K.; density: 0.90 g/cm³, melting point: 138 °C, MFR: 7.0 g/10 min) composing the first heat seal layer; and
a mixture of polypropylene (product name: FL7540L, density: 0.90 g/cm³, melting point: 138 °C, MFR: 7.0g/10 min, manufactured by TPC K.K.) and a heat seal modifier (product name: Tafmer A-4085S, density: 0.885 g/cm³, melting point: 66 °C, MFR: 3.6g/10 min, manufactured by Mitsui Chemicals K.K.) (polypropylene: heat seal modifier = 60 : 40 (by mass)) composing the second heat seal layer;
were co-extruded by the T-die method, to give a heat-sealable laminate having a structure comprising a first heat seal layer (20 µm) and a second heat seal layer (10 µm).

An aluminum vapor-deposited film having a thickness of 30 nm was formed on the first heat seal layer of the heat-sealable laminate produced as described above by the PVD method. The deposition concentration (OD value) of the vapor-deposited film to be formed was determined as 3.0.

A biaxially stretched polypropylene film (product name: P2108, manufactured by Toyobo K.K.) having a thickness of 25 µm was prepared as a substrate. An image was formed on one side of the biaxially stretched polypropylene film by a gravure printing method using a solvent type gravure ink (FINATO, manufactured by DIC Graphics K.K.).

The surface to which the aluminum vapor-deposited film is formed of the substrate and the surface to which the image is formed of biaxially stretched polypropylene film were laminated through a two-part curing polyurethane adhesive (product name: RU-3600 / H-689, manufactured by Rock Paint K.K.) to obtain a laminate for a packaging material. The proportion of the same polyolefin (PP) in the laminate for a packaging material thus obtained was 88% by mass.

### Comparative Example 1-3

A laminate for a packaging material was obtained in the same manner as in Example 1-1, except that a biaxially stretched polyester film (product name: E5100, manufactured by Toyobo K.K.) having a thickness of 12 µm was used as the substrate. The proportion of the same polyolefin (PP) in the laminate for a packaging material thus obtained was 53% by mass.

### <<Recyclability Evaluation>>

Recyclability of the laminates for a packaging material obtained in the above Examples and Comparative Examples was evaluated based on the following evaluation criteria. The evaluation results are summarized in Table 1.

### (Evaluation Criteria)

○: The content of the same polyolefin in the laminate for a packaging material was 80 % by mass or more.

×: The content of the same polyolefin in the laminate for a packaging material was less than 80% by mass.

### <<Strength Evaluation>>

Strength of the laminates for a packaging material produced in the above Examples and Comparative Examples was measured by a tensile testing machine (product name: RTC - 1310A, manufactured by Orientech K.K.) when the laminates were pierced with a needle having a diameter of 0.5 mm. The piercing speed was 50 mm/min. The measurement results are summarized in Table 1.

### <<Evaluation of Heat Resistance>>

Two test pieces each having a length of 80 mm and a width of 80 mm were produced from the laminates for a packaging material obtained in the above Examples and Comparative Examples.

The two test pieces were superimposed so that the second heat seal layers faces each other, and three sides were heat-sealed at 150 °C to produce a small bag-form packaging material.

The produced packaging material was visually observed, and the heat resistance of the laminate for packaging material was evaluated based on the following evaluation criteria. The evaluation results are summarized in Table 1.

### (Evaluation Criteria)

○: No wrinkles were generated on the surface of the packaging material, and no adhesion to the heat seal bar was observed.

×: Wrinkles were generated on the surface of the packaging material, and adhesion to the heat seal bar was observed, thus the bag could not be prepared.

### <<Printability Evaluation>>

In the above Examples and Comparative Examples, images formed on the substrates were visually observed, and printability was evaluated based on the following evaluation criteria. The evaluation results are summarized in Table 1.

### (Evaluation Criteria)

○: Dimensional stability at the time of printing was good, and a good image was able to be formed with no rubbing, bleeding, etc. occuring.

×: Stretching or shrinking of the film occurred during printing, and rubbing or bleeding occurred in the formed image.

### <<Evaluation of Oxygen Barrier Properties>>

The laminates for a packaging material obtained in the above-described Examples and Comparative Examples were cut into an A4 size, and oxygen permeability (cc / m² / day / atm) under an environment of 23 °C and relative humidity of 90% was measured using OXTRAN2 / 20 manufactured by MOCON from the U.S.A. The measurement results are summarized in Table 1.

### <<Evaluation of Water Vapor Barrier Properties>>

The laminates obtained in the above-described Examples and Comparative Examples were cut into an A4 size, and water vapor transmission rate (g/m²/day/atm) under an environment of 40 °C and relative humidity of 90% was measured using PERMATRAN 3/31 manufactured by MOCON from the U.S.A. The measurement results are summarized in Table 1.

### <Evaluation of Bending Load Resistance>

The laminates for a packaging material obtained as described above were subjected to bending load (stroke: 155 mm, bending operation: 440°) for five times in accordance with ASTM F 392 using a gelbo flex tester (Tester Industry K.K., product name: BE1006BE).

After the bending load, oxygen permeability and water vapor permeability of the laminates were measured. The measurement results are summarized in Table 1.

### <<Heat-sealing Test>>

The laminates for a packaging material obtained in the above-described Examples and Comparative Examples were cut into a size of 10 cm × 10 cm to prepare sample pieces. The sample piece was folded in two so that the second heat seal layer was inside, and an area of 1 cm × 10 cm was heat-sealed under the condition of a temperature of 140 °C and a pressure of 1 kgf/cm² for 1 second.

The heat-sealed sample piece was cut into strips with a width of 15 mm, and both ends of the unheat-sealed sample were held by a tensile testing machine, and the peel strength (N/15 mm) was measured under the condition of a speed of 300 mm/min and a load range of 50N. The measurement results are summarized in Table 1.

The laminate for a packaging material obtained in Comparative Example 1-1 adhered to the heat seal bar and the peel strength could not be measured, therefore, the result was indicated as "-".

**[Table 1]**

| Table 1 | Proportion of polyolefin (% by mass) | Recycl -ability evaluation | Strength evaluation (N) | Heat Resistance Evaluation | Print -ability Evaluation | Oxygen Barrier Test (cc/m²/day/atm) | Water vapor Barrier Test (g/m²/day/atm) | Bending Load Resistance Test | | Sealing Test (N/15mm) |
|---|---|---|---|---|---|---|---|---|---|---|
| | | | | | | | | Oxygen barrier properties (cc/m²/day/atm) | Water vapor barrier properties (g/m²/day/atm) | |
| Ex. 1-1 | 84 | ○ | 13.7 | ○ | ○ | 0.28 | 0.31 | 0.45 | 2.50 | 32 |
| Ex. 1-2 | 84 | ○ | 13.8 | ○ | ○ | 0.56 | 0.68 | 0.78 | 2.85 | 30 |
| Ex. 1-3 | 84 | ○ | 13.5 | ○ | ○ | 0.12 | 0.15 | 0.31 | 0.35 | 33 |
| Ex. 1-1 | 84 | ○ | 8.7 | × | × | 0.30 | 0.32 | 0.51 | 2.63 | - |
| Comp. Ex. 1-2 | 88 | ○ | 12.5 | ○ | ○ | 1.50 | 2.53 | 6.54 | 7.83 | 30 |
| Comp. Ex. 1-3 | 53 | × | 11.5 | ○ | ○ | 0.29 | 0.28 | 0.53 | 2.87 | 32 |

### Example 2-1

A biaxially stretched polypropylene film (product name: P2108, manufactured by Toyobo K.K.) having a thickness of 18 µm was prepared as a substrate body, and to one surface of this substrate body was applied a polyvinyl alcohol-based barrier coating agent (EKF1407. F, manufactured by Michelman K.K.) by a gravure method and then the agent was dried to form a barrier coating layer having a thickness of 1 µm, thereby giving a laminated substrate.

An image was formed on the barrier coating layer formed as described above by a gravure printing method using a solvent type gravure ink (FINATO, manufactured by DIC Graphics K.K.).

As a heat seal layer, polypropylene (product name: FL7540L, density: 0.90 g/cm³, melting point: 138 °C, MFR: 7.0 g/10 min, manufactured by TPC K.K.) was extruded by the T-die method to form an unstretched polypropylene film having a thickness of 35 µm.

An aluminum vapor-deposited film having a thickness of 30 nm was formed on one side of the unstretched polypropylene film thus produced as above by the PVD method. The deposition concentration (OD value) of the vapor-deposited film to be formed was determined as 3.0.

The barrier coating layer surface of the laminated substrate and the surface to which the vapor-deposited film is formed of the heat seal layer were laminated via a two-part curing polyurethane adhesive (product name: RU-3600 / H-689, manufactured by Rock Paint K.K.) to obtain a laminate for a packaging material. The proportion of the same polyolefin (PP) in the laminate for a packaging material thus obtained was 93% by mass.

### Example 2-2

A laminate for a packaging material of the present invention was produced in the same manner as in Example 2-1, except that the thickness of the aluminum vapor-deposited film was changed to 20 nm and the OD value of the vapor-deposited film was changed to 2.0. The proportion of the same polyolefin (PP) in the laminate for a packaging material thus obtained was 93% by mass.

### Example 2-3

A laminate for a packaging material of the present invention was produced in the same manner as in Example 2-1, except that the two-part curing polyurethane adhesive was changed to a two-part curing adhesive comprising a polyester polyol, an isocyanate compound and a phosphoric acid-modified compound (manufactured by DIC Corporation, product name: PASLIM VM001/VM102CP). The proportion of the same polyolefin (PP) in the laminate for a packaging material thus obtained was 93% by mass.

### Comparative Example 2-1

A laminate for a packaging material was obtained in the same manner as in Example 2-1, except that an unstretched polypropylene film (product name: P1108, manufactured by Toyobo K.K.) having a thickness of 18 µm was used as the substrate body. The proportion of the same polyolefin (PP) in the laminate thus obtained was 93% by mass.

### Comparative Example 2-2

A laminate for a packaging material was obtained in the same manner as in Example 2-1, except that a barrier coating layer was not provided in the laminated substrate. The proportion of the same polyolefin (PP) in the laminate thus obtained was 95% by mass.

### Comparative Example 2-3

A laminate for a packaging material was obtained in the same manner as in Example 2-1, except that a biaxially stretched polyester film (product name: E5100, manufactured by Toyobo K.K.) having a thickness of 12 µm was used as the substrate. The proportion of the same polyolefin (PP) in the laminate thus obtained was 69% by mass.

### <<Recyclability Evaluation>>

Recyclability of the laminates for a packaging material obtained in the above Examples and Comparative Examples was evaluated based on the following evaluation criteria. The evaluation results are summarized in Table 1.

### (Evaluation Criteria)

○: The content of the same polyolefin in the laminate for a packaging material was 80 % by mass or more.

×: The content of the same polyolefin in the laminate for a packaging material was less than 80% by mass.

### <<Strength Evaluation>>

Strength of the laminates for a packaging material produced in the above Examples and Comparative Examples was measured by a tensile testing machine (product name: RTC-1310A, manufactured by Orientech K.K.) when the laminates were pierced with a needle having a diameter of 0.5 mm. The piercing speed was 50 mm/min. The measurement results are summarized in Table 2.

### <<Evaluation of Heat Resistance>>

Two test pieces each having a length of 80 mm and a width of 80 mm were produced from the laminates for a packaging material obtained in the above Examples and Comparative Examples.

The two test pieces were superimposed so that the heat seal layers faces each other, and three sides were heat-sealed at 150 °C to produce a small bag-form packaging material.

The produced packaging material was visually observed, and the heat resistance of the laminate for packaging material was evaluated based on the following evaluation criteria. The evaluation results are summarized in Table 2.

### (Evaluation Criteria)

○: No wrinkles were generated on the surface of the packaging material, and no adhesion to the heat seal bar was observed.

×: Wrinkles were generated on the surface of the packaging material, and adhesion to the heat seal bar was observed, thus the bag could not be prepared.

### <<Evaluation of Oxygen Barrier Properties>>

The laminates for a packaging material obtained in the above-described Examples and Comparative Examples were cut into an A4 size, and oxygen permeability (cc / m² / day / atm) under an environment of 23 °C and relative humidity of 90% was measured using OXTRAN2 / 20 manufactured by MOCON from the U.S.A. The measurement results are summarized in Table 2.

### <<Evaluation of Water Vapor Barrier Properties>>

The laminates obtained in the above-described Examples and Comparative Examples were cut into an A4 size, and water vapor transmission rate (g/m²/day/atm) under an environment of 40 °C and relative humidity of 90% was measured using PERMATRAN 3/31 manufactured by MOCON from the U.S.A. The measurement results are summarized in Table 2.

### <Evaluation of Bending Load Resistance>

The laminates for a packaging material obtained as described above were subjected to bending load (stroke: 155 mm, bending operation: 440°) for five times in accordance with ASTM F 392 using a gelbo flex tester (Tester Industry K.K., product name: BE1006BE).

After the bending load, oxygen permeability and water vapor permeability of the laminates were measured. The measurement results are summarized in Table 2.

### <<Heat-sealing Test>>

The laminates for a packaging material obtained in the above-described Examples and Comparative Examples were cut into a size of 10 cm × 10 cm to prepare sample pieces. The sample piece was folded in two so that the heat seal layer was inside, and an area of 1 cm × 10 cm was heat-sealed under the condition of a temperature of 140 °C and a pressure of 1 kgf/cm² for 1 second.

The heat-sealed sample piece was cut into strips with a width of 15 mm, and both ends of the unheat-sealed sample were held by a tensile testing machine, and the peel strength (N/15 mm) was measured under the condition of a speed of 300 mm/min and a load range of 50N. The measurement results are summarized in Table 2.

The laminate for a packaging material obtained in Comparative Example 2-1 adhered to the heat seal bar and the peel strength could not be measured, therefore, the result was indicated as "-".

**[Table 2]**

| Table 2 | Proportion of Polyolefin (% by mass) | Recyclability evaluation | Strength evaluation (N) | Heat Resistance Evaluation | Oxygen barrier test (cc/m²/day/atm) | Water vapor barrier test (g/m²/day/atm) | Bending load resistance test | | Sealing test (N/15mm) |
|---|---|---|---|---|---|---|---|---|---|
| | | | | | | | Oxygen barrier properties (cc/m²/day/atm) | Water vapor barrier properties (g/m²/day/atm) | |
| Ex. 2-1 | 93 | ○ | 10.8 | ○ | 0.38 | 1.87 | 0.85 | 3.29 | 22 |
| Ex. 2-2 | 93 | ○ | 10.6 | ○ | 0.47 | 2.01 | 1.02 | 3.61 | 22 |
| Ex. 2-3 | 93 | ○ | 10.8 | ○ | 0.31 | 1.65 | 0.45 | 2.05 | 23 |
| Comp. Ex. 2-1 | 93 | ○ | 7.5 | × | 0.54 | 2.10 | 1.23 | 3.47 | - |
| Comp. Ex. 2-2 | 95 | ○ | 10.2 | ○ | 1.58 | 2.62 | 6.38 | 7.91 | 22 |
| Comp. Ex. 2-3 | 69 | × | 9.5 | ○ | 0.35 | 2.15 | 0.81 | 3.57 | 21 |

### Example 3-1

A biaxially stretched polypropylene film (product name: P2108, manufactured by Toyobo K.K.) having a thickness of 18 µm was prepared as a substrate body, and to one side of this substrate body was formed an aluminum oxide vapor-deposited film having a thickness of 30 nm by the PVD method.

Further, a polyvinyl alcohol barrier coating agent (MFB7010, manufactured by Michelman K.K.) was applied onto the aluminum oxide vapor-deposited film by a gravure method and dried to form a barrier coating layer having a thickness of 1 µm, thereby producing a laminated substrate.

An image was formed on the barrier coating layer of the laminated substrate thus formed as above by a gravure printing method using a solvent type gravure ink (FINATO manufactured by DIC Graphics K.K.).

Polypropylene (product name: FL7540L, density: 0.90 g/cm³, melting point: 138 °C, MFR: 7.0 g/10 min, manufactured by TPC K.K.) was formed into a film by extrusion using the T-die method to prepare an unstretched polypropylene film having a thickness of 35 µm as a heat seal layer.

An aluminum vapor-deposited film having a thickness of 30 nm which is also a second vapor-deposited film was formed on one surface of the heat seal layer produced as described above by the PVD method. The deposition concentration (OD value) of the vapor-deposited film to be formed was measured to be 3.0.

The surface to which the barrier coating layer is formed of the laminated substrate and the surface to which the aluminum vapor-deposited film is formed of the heat seal layer were laminated via a two-part curing polyurethane adhesive

(product name: RU-3600 / H-689, manufactured by Rock Paint K.K.) to obtain a laminate for a packaging material. The proportion of the same polyolefin (PP) in the laminate for a packaging material thus obtained was 93% by mass.

### Example 3-2

A laminate for a packaging material was produced in the same manner as in Example 3-1 except that the thickness of the aluminum vapor-deposited film was changed to 20 nm and the OD value of the vapor-deposited film was changed to 2.0. The proportion of the same polyolefin (PP) in the laminate for a packaging material thus obtained was 93% by mass.

### Example 3-3

A laminate for a packaging material of the present invention was produced in the same manner as in Example 3 - 1, except that the two-part curing polyurethane adhesive was changed to a two-part curing adhesive comprising a polyester polyol, an isocyanate compound and a phosphoric acid-modified compound (manufactured by DIC Corporation, product name: PASLIM VM001/VM102CP). The proportion of the same polyolefin (PP) in the laminate for a packaging material thus obtained was 93% by mass.

### Comparative Example 3-1

A laminate for a packaging material was obtained in the same manner as in Example 3-1, except that the laminated substrate was changed to an unstretched polypropylene film having a thickness of 18 µm (product name: P1108, manufactured by Toyobo K.K.). The proportion of the same polyolefin (PP) in the laminate thus obtained was 93% by mass.

### Comparative Example 3-2

A laminate for a packaging material was obtained in the same manner as in Example 3-1, except that no vapor-deposited film was provided in the laminated substrate. The proportion of the same polyolefin (PP) in the laminate thus obtained was 93% by mass.

### Comparative Example 3-3

A laminate for a packaging material was obtained in the same manner as in Example 3-1, except that the substrate body was a biaxially stretched polyester film having a thickness of 12 µm (product name: E5100, manufactured by Toyobo K.K.). The proportion of the same polyolefin (PP) in the laminate thus obtained was 69% by mass.

### <<Recyclability Evaluation>>

Recyclability of the laminates for a packaging material obtained in the above Examples and Comparative Examples was evaluated based on the following evaluation criteria. The evaluation results are summarized in Table 3.

### (Evaluation Criteria)

○: The content of the same polyolefin in the laminate for a packaging material was 80 % by mass or more.

×: The content of the same polyolefin in the laminate for a packaging material was less than 80% by mass.

### <<Strength Evaluation>>

Strength of the laminates for a packaging material produced in the above Examples and Comparative Examples was measured by a tensile testing machine (product name: RTC-1310A, manufactured by Orientech K.K.) when the laminates were pierced with a needle having a diameter of 0.5 mm. The piercing speed was 50 mm/min. The measurement results are summarized in Table 3.

### <<Evaluation of Heat Resistance>>

Two test pieces each having a length of 80 mm and a width of 80 mm were produced from the laminates for a packaging material obtained in the above Examples and Comparative Examples.

The two test pieces were superimposed so that the heat seal layers faces each other, and three sides were heat-sealed at 150 °C to produce a small bag-form packaging material.

The produced packaging material was visually observed, and the heat resistance of the laminate for packaging material was evaluated based on the following evaluation criteria. The evaluation results are summarized in Table 3.

### (Evaluation Criteria)

○: No wrinkles were generated on the surface of the packaging material, and no adhesion to the heat seal bar was observed.

×: Wrinkles were generated on the surface of the packaging material, and adhesion to the heat seal bar was observed, thus the bag could not be prepared.

### <<Evaluation of Oxygen Barrier Properties>>

The laminates for a packaging material obtained in the above-described Examples and Comparative Examples were cut into an A4 size, and oxygen permeability (cc/m²/day/atm) under an environment of 23 °C and relative humidity of 90% was measured using OXTRAN2 / 20 manufactured by MOCON from the U.S.A. The measurement results are summarized in Table 3.

### <<Evaluation of Water Vapor Barrier Properties>>

The laminates obtained in the above-described Examples and Comparative Examples were cut into an A4 size, and water vapor transmission rate (g/m²/day/atm) under an environment of 40 °C and relative humidity of 90% was measured using PERMATRAN 3/31 manufactured by MOCON from the U.S.A. The measurement results are summarized in Table 3.

### <Evaluation of Bending Load Resistance>

The laminates for a packaging material obtained as described above were subjected to bending load (stroke: 155 mm, bending operation: 440°) for five times in accordance with ASTM F 392 using a gelbo flex tester (Tester Industry K.K., product name: BE1006BE).

After the bending load, oxygen permeability and water vapor permeability of the laminates were measured. The measurement results are summarized in Table 3.

### <<Heat-sealing Test>>

The laminates for a packaging material obtained in the above-described Examples and Comparative Examples were cut into a size of 10 cm × 10 cm to prepare sample pieces. The sample piece was folded in two so that the heat seal layer was inside, and an area of 1 cm × 10 cm was heat-sealed under the condition of a temperature of 140 °C and a pressure of 1 kgf/cm² for 1 second.

The heat-sealed sample piece was cut into strips with a width of 15 mm, and both ends of the unheat-sealed sample were held by a tensile testing machine, and the peel strength (N/15 mm) was measured under the condition of a speed of 300 mm/min and a load range of 50N. The measurement results are summarized in Table 3.

The laminate for a packaging material obtained in Comparative Example 3-1 adhered to the heat seal bar and the peel strength could not be measured, therefore, the result was indicated as "-".

**[Table 3]**

| Table 3 | Proportion of polyolefin (% by mass) | Recycl -ability evaluation | Strength evaluation (N) | Heat Resistance Evaluation | Oxygen barrier test (cc/m²/day/atm) | Water vapor barrier test (g/m²/day/atm) | Bending load resistance test | | Sealing test (N/15mm) |
|---|---|---|---|---|---|---|---|---|---|
| | | | | | | | Oxygen barrier properties (cc/m²/day/atm) | Water vapor barrier properties (g/m²/day/atm) | |
| Ex. 3-1 | 93 | ○ | 11.0 | ○ | 0.25 | 0.47 | 0.84 | 1.52 | 24 |
| Ex. 3-2 | 93 | ○ | 10.7 | ○ | 0.34 | 0.61 | 0.98 | 1.72 | 22 |
| Ex. 3-3 | 93 | ○ | 11.1 | ○ | 0.21 | 0.35 | 0.40 | 0.72 | 22 |
| Comp. Ex. 3-1 | 93 | ○ | 7.6 | × | 0.40 | 0.75 | 1.05 | 1.84 | - |
| Comp. Ex. 3-2 | 93 | ○ | 10.8 | ○ | 0.38 | 1.87 | 0.85 | 3.29 | 21 |
| Comp. Ex. 3-3 | 69 | × | 9.3 | ○ | 0.21 | 0.40 | 0.82 | 1.43 | 23 |

### Example 4-1

A biaxially stretched polypropylene film (product name: P2108, manufactured by Toyobo K.K.) having a thickness of 18 µm was prepared as a substrate body, and to one surface of this substrate body was applied a polyvinyl alcohol-based barrier coating agent (EKF1407.F, manufactured by Michelman K.K.) by a gravure method and dried to form a barrier coating layer having a thickness of 1 µm, thereby giving a laminated base.

An image was formed by a gravure printing method on the barrier coating layer thus formed as above using a solvent type gravure ink (FINATO, manufactured by DIC Graphics K.K.).

As a heat seal layer, polypropylene (product name: FL7540L, density: 0.90 g/cm³, melting point: 138 °C, MFR: 7.0 g/10 min, manufactured by TPC K.K.) was extruded by the T-die method to form a film, and an unstretched polypropylene film having a thickness of 35 µm was prepared.

An aluminum vapor-deposited film having a thickness of 30 nm was formed on one surface of the heat seal layer thus produced as above by the PVD method to produce a heat seal laminate. The deposition concentration (OD value) of the vapor-deposited film to be formed was determined as 3.0.

The barrier coating layer surface of the laminated substrate and the surface to which the vapor-deposited film was formed of the heat-sealable laminate were laminated via a two-part curing polyurethane adhesive (product name: RU-3600 / H-689, manufactured by Rock Paint K.K.) to obtain a laminate for a packaging material of the present invention. The proportion of the same polyolefin (PP) in the laminate for a packaging material thus obtained was 93% by mass.

### Example 4-2

A laminate for a packaging material of the present invention was prepared in the same manner as in Example 4-1, except that the thickness of the aluminum vapor-deposited film was changed to 20 nm and the OD value of the vapor-deposited film was changed to 2.0. The proportion of the same polyolefin (PP) in the laminate for a packaging material thus obtained was 93% by mass.

### Example 4-3

A laminate for a packaging material of the present invention was produced in the same manner as in Example 4-1, except that the two-part curing polyurethane adhesive was changed to a two-part curing adhesive comprising a polyester polyol, an isocyanate compound and a phosphoric acid-modified compound (manufactured by DIC Corporation, product name: PASLIM VM001/VM102CP). The proportion of the same polyolefin (PP) in the laminate for a packaging material thus obtained was 93% by mass.

### Examples 4-4

A biaxially stretched polypropylene film (product name: P2108, manufactured by Toyobo K.K.) having a thickness of 18 µm was prepared as a substrate body, and on one side of this substrate body was formed an aluminum oxide vapor-deposited film having a thickness of 30 nm by the PVD method.

Further, a polyvinyl alcohol barrier coating agent (MFB7010, manufactured by Michelman K.K.) was applied onto the aluminum oxide vapor-deposited film by a gravure method and dried to form a barrier coating layer having a thickness of 1 µm, thereby producing a laminated substrate.

An image was formed on the barrier coating layer of the laminated substrate formed as described above by a gravure printing method using a solvent type gravure ink (FINATO, manufactured by DIC Graphics K.K.).

As a heat seal layer, polypropylene (product name: FL7540L, density: 0.90 g/cm³, melting point: 138 °C, MFR: 7.0 g/10 min, manufactured by TPC K.K.) was extruded by the T-die method to form a film, and an unstretched polypropylene film having a thickness of 35 µm was prepared.

An aluminum vapor-deposited film having a thickness of 30 nm, which was also a second vapor-deposited film, was formed on one surface of the heat seal layer thus produced as above by the PVD method to produce a heat seal laminate. The deposition concentration (OD value) of the vapor-deposited film to be formed was determined as 3.0.

The surface to which the barrier coating layer is formed of the laminated substrate and the surface to which the aluminum vapor-deposited film is formed of the heat-sealable laminate were laminated via a two-part curing polyurethane adhesive (product name: RU-3600 / H-689, manufactured by Rock Paint K.K.) to obtain a laminate for a packaging material of the present invention. The proportion of the same polyolefin (PP) in the laminate for a packaging material thus obtained was 93% by mass.

### Example 4-5

A laminate for a packaging material of the present invention was produced in the same manner as in Example 4-4, except that the thickness of the aluminum vapor-deposited film was changed to 20 nm and the OD value of the vapor-deposited film was changed to 2.0. The proportion of the same polyolefin (PP) in the laminate for a packaging material thus obtained was 93% by mass.

### Examples 4-6

A laminate for a packaging material of the present invention was produced in the same manner as in Example 4-1 except that the two-part curing polyurethane adhesive was changed to a two-part curing adhesive comprising a polyester polyol, an isocyanate compound and a phosphoric acid-modified compound (manufactured by DIC Corporation, product name: PASLIM VM001/VM102CP). The proportion of the same polyolefin (PP) in the laminate for a packaging material thus obtained was 93% by mass.

### Comparative Example 4-1

A laminate for a packaging material was obtained in the same manner as in Example 4-1, except that an unstretched polypropylene film (product name: P1108, manufactured by Toyobo K.K.) having a thickness of 18 µm was used as the substrate body. The proportion of the same polyolefin (PP) in the laminate thus obtained was 93% by mass.

### Comparative Example 4-2

A laminate for a packaging material was obtained in the same manner as in Example 4-1, except that a barrier coating layer was not provided in the laminated substrate. The proportion of the same polyolefin (PP) in the laminate thus obtained was 95% by mass.

### Comparative Example 4-3

A laminate for a packaging material was obtained in the same manner as in Example 4-1, except that a biaxially stretched polyester film (product name: E5100, manufactured by Toyobo K.K.) having a thickness of 12 µm was used instead of the laminated substrate. The proportion of the same polyolefin (PP) in the laminate thus obtained was 69% by mass.

### Comparative Example 4-4

A laminate for a packaging material was obtained in the same manner as in Example 4- 4, except that an unstretched polypropylene film (product name: P1108, manufactured by Toyobo K.K.) having a thickness of 18 µm was used as the substrate body. The proportion of the same polyolefin (PP) in the laminate thus obtained was 93% by mass.

### Comparative Example 4-5

A laminate for a packaging material was obtained in the same manner as in Example 4-4, except that the substrate body was a biaxially stretched polyester film (product name: E5100, manufactured by Toyobo K.K.) having a thickness of 12 µm. The proportion of the same polyolefin (PP) in the laminate thus obtained was 69% by mass.

### <<Recyclability Evaluation>>

Recyclability of the laminates for a packaging material obtained in the above Examples and Comparative Examples was evaluated based on the following evaluation criteria. The evaluation results are summarized in Table 4.

### (Evaluation Criteria)

○: The content of the same polyolefin in the laminate for a packaging material was 80 % by mass or more.

×: The content of the same polyolefin in the laminate for a packaging material was less than 80% by mass.

### <<Strength Evaluation>>

Strength of the laminates for a packaging material produced in the above Examples and Comparative Examples was measured by a tensile testing machine (product name: RTC-1310A, manufactured by Orientech K.K.) when the laminates were pierced with a needle having a diameter of 0.5 mm. The piercing speed was 50 mm/min. The measurement results are summarized in Table 4.

### <<Evaluation of Heat Resistance>>

Two test pieces each having a length of 80 mm and a width of 80 mm were produced from the laminates for a packaging material obtained in the above Examples and Comparative Examples.

The two test pieces were superimposed so that the heat seal layers faces each other, and three sides were heat-sealed at 150 °C to produce a small bag-form packaging material.

The produced packaging material was visually observed, and the heat resistance of the laminate for packaging material was evaluated based on the following evaluation criteria. The evaluation results are summarized in Table 4.

### (Evaluation Criteria)

○: No wrinkles were generated on the surface of the packaging material, and no adhesion to the heat seal bar was observed.

×: Wrinkles were generated on the surface of the packaging material, and adhesion to the heat seal bar was observed, thus the bag could not be prepared.

### <<Evaluation of Oxygen Barrier Properties>>

The laminates for a packaging material obtained in the above-described Examples and Comparative Examples were cut into an A4 size, and oxygen permeability (cc/m²/day/atm) under an environment of 23 °C and relative humidity of 90% was measured using OXTRAN2 / 20 manufactured by MOCON from the U.S.A. The measurement results are summarized in Table 4.

### <<Evaluation of Water Vapor Barrier Properties>>

The laminates obtained in the above-described Examples and Comparative Examples were cut into an A4 size, and water vapor transmission rate (g/m²/day/atm) under an environment of 40 °C and relative humidity of 90% was measured using PERMATRAN 3/31 manufactured by MOCON from the U.S.A. The measurement results are summarized in Table 4.

### <Evaluation of Bending Load Resistance>

The laminates for a packaging material obtained as described above were subjected to bending load (stroke: 155 mm, bending operation: 440°) for five times in accordance with ASTM F 392 using a gelbo flex tester (Tester Industry K.K., product name: BE1006BE).

After the bending load, oxygen permeability and water vapor permeability of the laminates were measured. The measurement results are summarized in Table 4.

### <<Heat-sealing Test>>

The laminates for a packaging material obtained in the above-described Examples and Comparative Examples were cut into a size of 10 cm × 10 cm to prepare sample pieces. The sample piece was folded in two so that the heat seal layer was inside, and an area of 1 cm × 10 cm was heat-sealed under the condition of a temperature of 140 °C and a pressure of 1 kgf/cm² for 1 second.

The heat-sealed sample piece was cut into strips with a width of 15 mm, and both ends of the unheat-sealed sample were held by a tensile testing machine, and the peel strength (N/15 mm) was measured under the condition of a speed of 300 mm/min and a load range of 50N. The measurement results are summarized in Table 4.

The laminate for a packaging material obtained in Comparative Example 4-1 adhered to the heat seal bar and the peel strength could not be measured, therefore, the result was indicated as "-".

**[Table 4]**

| Table 4 | Proportion of Polyolefin (% by mass) | Recycl -ability evaluation | Strength evaluative (N) | Heat Resistance Evaluation | Oxygen barrier test (cc/m²/day/atm) | Water vapor barrier test (g/m²/day/atm) | Bending load resistance test | | Sealing test (N/15mm) |
|---|---|---|---|---|---|---|---|---|---|
| | | | | | | | Oxygen barrier properties (cc/m²/day/atm) | Water vapor barrier properties (g/m²/day/atm) | |
| EX. 4-1 | 93 | ○ | 10.8 | ○ | 0.38 | 1.87 | 0.85 | 3.29 | 22 |
| EX. 4-2 | 93 | ○ | 10.6 | ○ | 0.47 | 2.01 | 1.02 | 3.61 | 22 |
| EX. 4-3 | 93 | ○ | 10.8 | ○ | 0.31 | 1.65 | 0.45 | 2.05 | 23 |
| EX. 4-4 | 93 | ○ | 11.0 | ○ | 0.25 | 0.47 | 0.84 | 1.52 | 24 |
| EX. 4-5 | 93 | ○ | 10.7 | ○ | 0.34 | 0.61 | 0.98 | 1.72 | 22 |
| EX. 4-6 | 93 | ○ | 11.1 | ○ | 0.21 | 0.35 | 0.40 | 0.72 | 22 |
| Comp. Ex. 4-1 | 93 | ○ | 7.5 | × | 0.54 | 2.10 | 1.23 | 3.47 | - |
| Comp. Ex. 4-2 | 95 | ○ | 10.2 | ○ | 1.58 | 2.62 | 6.38 | 7.91 | 22 |
| Comp. Ex. 4-3 | 69 | × | 9.5 | ○ | 0.35 | 2.15 | 0.81 | 3.57 | 21 |
| Comp. Ex. 4-4 | 93 | ○ | 7.6 | × | 0.40 | 0.75 | 1.05 | 1.84 | - |
| Comp. Ex. 4-5 | 69 | × | 9.3 | ○ | 0.21 | 0.40 | 0.82 | 1.43 | 23 |

### Example 5-1

An ethylene-vinyl alcohol copolymer (EVOH, manufactured by Kuraray K.K., product name: EVAL E171B, density: 1.14 g/cm³, melting point : 165 °C, MFR: 1.7 g/10 min, ethylene content: 44% by mass) composing the gas barrier resin layer;
polyolefin (product name: Admer QF551, manufactured by Mitsui Chemicals K.K. ; density: 0.89 g/cm³ ; melting point: 135 °C; MFR: 2.5 g/10 min) composing the adhesive resin layer;
polypropylene (product name: FL7540L, density: 0.90 g/cm³, melting point: 138 °C, MFR: 7.0 g/10 min, manufactured by TPC K.K.) composing the substrate body;
were co-extruded by the T - die method to form a film, and the film was stretched by 3.1 folds in the machine direction (MD) and the width direction (TD), respectively to give a laminated substrate having a structure comprising a gas barrier resin layer (1 µm), an adhesive resin layer (2 µm), and a substrate body (15 µm).

An aluminum oxide vapor-deposited film having a thickness of 30 nm was formed by the PVD method on the gas barrier resin layer of the laminated substrate produced as described above.

An image was formed on the surface of the aluminum oxide vapor-deposited film of the laminated substrate by a gravure printing method using a solvent type gravure ink (FINATO, manufactured by DIC Graphics K.K.).

Next, polypropylene was extruded by the T-die method to be formed into a film, thereby giving an unstretched polypropylene film having a thickness of 35 µm composing the heat seal layer.

The surface to which the aluminum oxide vapor-deposited film is formed of the laminated substrate thus produced as above and the unstretched polypropylene film were laminated via a two-part curing polyurethane adhesive (product name: RU-3600 / H-689, manufactured by Rock Paint K.K.) to obtain a laminate of the present invention.

The proportion of the same polyolefin (PP) in the laminate thus obtained was 91% by mass.

### Example 5-2

A laminate for a packaging material of the present invention was prepared in the same manner as in Example 5-1, except that the thickness of both aluminum vapor-deposited films was changed to 20 nm. The proportion of the same polyolefin (PP) in the laminate thus obtained was 91% by mass.

### Example 5-3

A laminate of the present invention was prepared in the same manner as in Example 5-1, except that the adhesive was changed to a two-part curing adhesive (product name: PASLIM VM001/VM102CP, manufactured by DIC K.K.) containing a polyester polyol, an isocyanate compound, and a phosphate-modified compound. The proportion of the same polyolefin (PP) in the laminate thus obtained was 91% by mass.

### Comparative Example 5-1

A laminate was obtained in the same manner as in Example 5-1, except that an unstretched polypropylene film (product name: P1108, manufactured by Toyobo K.K.) having a thickness of 18 µm was used instead of the laminated substrate. The proportion of the same polyolefin (PP) in the laminate thus obtained was 91% by mass.

### Comparative Example 5-2

A laminate was obtained in the same manner as in Example 5-1, except that the polypropylene was extruded by the T-die method to form a film, giving an unstretched polypropylene film having a thickness of 180 µm, and then the unstretched polypropylene film was stretched 3.1 folds each in the machine direction (MD) and in the traverse direction (TD) to obtain a stretched polypropylene film having a thickness of 18 µm, which was used as a substrate.

The proportion of the same polyolefin (PP) in the laminate thus obtained was 93% by mass.

### Comparative Example 5-3

A laminate for a packaging material was obtained in the same manner as in Example 1, except that a stretched polyester film (product name: E5100, manufactured by Toyobo K.K.) having a thickness of 12 µm was used instead of the laminated substrate. The proportion of the same polyolefin (PP) in the laminate thus obtained was 69% by mass.

### <<Recyclability Evaluation>>

Recyclability of the laminates for a packaging material obtained in the above Examples and Comparative Examples was evaluated based on the following evaluation criteria. The evaluation results are summarized in Table 5.

### (Evaluation Criteria)

○: The content of the same polyolefin in the laminate for a packaging material was 90 % by mass or more.

×: The content of the same polyolefin in the laminate for a packaging material was less than 90% by mass.

### <<Strength Evaluation>>

Strength of the laminates for a packaging material produced in the above Examples and Comparative Examples was measured by a tensile testing machine (product name: RTC-1310A, manufactured by Orientech K.K.) when the laminates were pierced with a needle having a diameter of 0.5 mm. The piercing speed was 50 mm/min. The measurement results are summarized in Table 5.

<<Evaluation of Heat Resistance>>

Two test pieces each having a length of 80 mm and a width of 80 mm were produced from the laminates for a packaging material obtained in the above Examples and Comparative Examples.

The two test pieces were superimposed so that the heat seal layers faces each other, and three sides were heat-sealed at 150 °C to produce a small bag-form packaging material.

The produced packaging material was visually observed, and the heat resistance of the laminate for packaging material was evaluated based on the following evaluation criteria. The evaluation results are summarized in Table 5.

### (Evaluation Criteria)

○: No wrinkles were generated on the surface of the packaging material, and no adhesion to the heat seal bar was observed.

×: Wrinkles were generated on the surface of the packaging material, and adhesion to the heat seal bar was observed, thus the bag could not be prepared.

### <<Evaluation of Oxygen Barrier Properties>>

The laminates for a packaging material obtained in the above-described Examples and Comparative Examples were cut into an A4 size, and oxygen permeability (cc/m²/day/atm) under an environment of 23 °C and relative humidity of 90% was measured using OXTRAN2 / 20 manufactured by MOCON from the U.S.A. The measurement results are summarized in Table 5.

### <<Evaluation of Water Vapor Barrier Properties>>

The laminates obtained in the above-described Examples and Comparative Examples were cut into an A4 size, and water vapor transmission rate (g/m²/day/atm) under an environment of 40 °C and relative humidity of 90% was measured using PERMATRAN 3/31 manufactured by MOCON from the U.S.A. The measurement results are summarized in Table 5.

<Evaluation of Bending Load Resistance>

The laminates for a packaging material obtained as described above were subjected to bending load (stroke: 155 mm, bending operation: 440°) for five times in accordance with ASTM F 392 using a gelbo flex tester (Tester Industry K.K., product name: BE1006BE).

After the bending load, oxygen permeability and water vapor permeability of the laminates were measured. The measurement results are summarized in Table 5.

### <<Heat-sealing Test>>

The laminates for a packaging material obtained in the above-described Examples and Comparative Examples were cut into a size of 10 cm × 10 cm to prepare sample pieces. The sample piece was folded in two so that the heat seal layer was inside, and an area of 1 cm × 10 cm was heat-sealed under the condition of a temperature of 150 °C and a pressure of 1 kgf/cm² for 1 second.

The heat-sealed sample piece was cut into strips with a width of 15 mm, and both ends of the unheat-sealed sample were held by a tensile testing machine, and the peel strength (N/15 mm) was measured under the condition of a speed of 300 mm/min and a load range of 50N. The measurement results are summarized in Table 5.

The laminate for a packaging material obtained in Comparative Example 5-1 adhered to the heat seal bar and the peel strength could not be measured, therefore, the result was indicated as "-".

**[Table 5]**

| Table 5 | Proportion of Polyolefin (% by mass) | Recycl -ability evaluation | Strength evaluation (N) | Heat Resistance Evaluation | Print -ability Evaluation | Oxygen Barrier Test (cc/m²/day/atm) | Water Vapor Barrier Test (g/m²/day/atm) | Bending Load Resistance Test | | Sealing Test (N/15mm) |
|---|---|---|---|---|---|---|---|---|---|---|
| | | | | | | | | Oxygen barrier properties (cc/m²/day/atm) | Water vapor barrier properties (g/m²/day/atm) | |
| Ex. 5-1 | 91 | ○ | 11.2 | ○ | ○ | 0.25 | 0.26 | 0.57 | 2.45 | 24 |
| Ex. 5-2 | 91 | ○ | 11.0 | ○ | ○ | 0.30 | 0.38 | 0.70 | 2.96 | 23 |
| Ex. 5-3 | 91 | ○ | 11.3 | ○ | ○ | 0.24 | 0.27 | 0.25 | 0.30 | 23 |
| Comp. Ex. 5-1 | 91 | ○ | 8.0 | × | × | 9.52 | 0.95 | 11.68 | 2.38 | - |
| Comp. Ex. 5-2 | 93 | ○ | 10.2 | ○ | ○ | 8.35 | 0.78 | 9.84 | 1.74 | 22 |
| Comp. Ex. 5-3 | 69 | × | 9.1 | ○ | ○ | 0.21 | 0.25 | 0.51 | 2.47 | 21 |

### Example 6-1

A biaxially stretched polypropylene film (product name: P2108, manufactured by Toyobo K.K.) having a thickness of 18 µm was prepared as a substrate body, and to one surface of this substrate body was formed an aluminum oxide vapor-deposited film having a thickness of 30 nm by the PVD method, which is also a first vapor-deposited film.

Further, a polyvinyl alcohol barrier coating agent (MFB7010, manufactured by Michelman K.K.) was applied onto the aluminum oxide vapor-deposited film by a gravure method and dried to form a barrier coating layer having a thickness of 1 µm, thereby producing a laminated substrate.

An image was formed on the barrier coating layer of the laminated substrate formed as described above by a gravure printing method using a solvent type gravure ink (FINATO, manufactured by DIC Graphics K.K.).

Polypropylene (product name: FL7540L, density: 0.90 g/cm³, melting point: 138 °C, MFR: 7.0 g/10 min, manufactured by TPC K.K.) was extruded and formed into a film by the T-die method to and an unstretched polypropylene film having a thickness of 35 µm was given.

An aluminum vapor-deposited film having a thickness of 30 nm, which is also a second vapor-deposited film, was formed by the PVD method on one surface of the unstretched polypropylene film thus produced as above, and a laminated heat seal layer was produced. The deposition concentration (OD value) of the vapor-deposited film to be formed was determined as 3.0.

The surface to which the barrier coating layer is formed of the laminated substrate and the surface to which the aluminum vapor-deposited film is formed of the heat-sealing laminate were laminated via a two-part curing polyurethane adhesive (product name: RU-3600 / H-689, manufactured by Rock Paint K.K.) to obtain a laminate for a packaging material of the present invention. The proportion of the same polyolefin (PP) in the laminate for a packaging material thus obtained was 93% by mass.

### Example 6-2

A laminate for a packaging material of the present invention was prepared in the same manner as in Example 6-1, except that the thickness of the aluminum vapor-deposited film was changed to 20 nm and the OD value of the vapor-deposited film was changed to 2.0. The proportion of the same polyolefin (PP) in the laminate for a packaging material thus obtained was 93% by mass.

### Example 6-3

A laminate for a packaging material of the present invention was prepared in the same manner as in Example 6-1 except that the barrier coating layer was not provided on the laminated substrate. The proportion of the same polyolefin (PP) in the laminate for a packaging material thus obtained was 95% by mass.

### Example 6-4

A laminate for a packaging material of the present invention was produced in the same manner as in Example 6-1 except that the two-part curing polyurethane adhesive was changed to a two-part curing adhesive comprising a polyester polyol, an isocyanate compound and a phosphoric acid-modified compound (manufactured by DIC K.K., product name: PASLIM VM001/VM102CP). The proportion of the same polyolefin (PP) in the laminate for a packaging material thus obtained was 93% by mass.

### Comparative Example 6-1

A laminate for a packaging material was obtained in the same manner as in Example 6-1, except that an unstretched polypropylene film (product name: P1108, manufactured by Toyobo K.K.) having a thickness of 18 µm was used as the substrate body. The proportion of the same polyolefin (PP) in the laminate thus obtained was 93% by mass.

### Comparative Example 6-2

A laminate for a packaging material was obtained in the same manner as in Example 6-1 except that the first vapor-deposited film was not provided. The proportion of the same polyolefin (PP) in the laminate thus obtained was 93% by mass.

### Comparative Example 6-3

A laminate for a packaging material was obtained in the same manner as in Example 6-1, except that the substrate body was a biaxially stretched polyester film (product name: E5100, manufactured by Toyobo K.K.) having a thickness of 12 µm. The proportion of the same polyolefin (PP) in the laminate thus obtained was 69% by mass.

### <<Recyclability Evaluation>>

Recyclability of the laminates for a packaging material obtained in the above Examples and Comparative Examples was evaluated based on the following evaluation criteria. The evaluation results are summarized in Table 6.

### (Evaluation Criteria)

○: The content of the same polyolefin in the laminate for a packaging material was 80 % by mass or more.

×: The content of the same polyolefin in the laminate for a packaging material was less than 80% by mass.

### <<Strength Evaluation>>

Strength of the laminates for a packaging material produced in the above Examples and Comparative Examples was measured by a tensile testing machine (product name: RTC-1310A, manufactured by Orientech K.K.) when the laminates were pierced with a needle having a diameter of 0.5 mm. The piercing speed was 50 mm/min. The measurement results are summarized in Table 6.

### <<Evaluation of Heat Resistance>>

Two test pieces each having a length of 80 mm and a width of 80 mm were produced from the laminates for a packaging material obtained in the above Examples and Comparative Examples.

The two test pieces were superimposed so that the heat seal layers faces each other, and three sides were heat-sealed at 150 °C to produce a small bag-form packaging material.

The produced packaging material was visually observed, and the heat resistance of the laminate for packaging material was evaluated based on the following evaluation criteria. The evaluation results are summarized in Table 6.

### (Evaluation Criteria)

○: No wrinkles were generated on the surface of the packaging material, and no adhesion to the heat seal bar was observed.

×: Wrinkles were generated on the surface of the packaging material, and adhesion to the heat seal bar was observed, thus the bag could not be prepared.

### <<Evaluation of Oxygen Barrier Properties>>

The laminates for a packaging material obtained in the above-described Examples and Comparative Examples were cut into an A4 size, and oxygen permeability (cc / m² / day / atm) under an environment of 23 °C and relative humidity of 90% was measured using OXTRAN2 / 20 manufactured by MOCON from the U.S.A. The measurement results are summarized in Table 6.

<<Evaluation of Water Vapor Barrier Properties>>

The laminates obtained in the above-described Examples and Comparative Examples were cut into an A4 size, and water vapor transmission rate (g/m²/day/atm) under an environment of 40 °C and relative humidity of 90% was measured using PERMATRAN 3/31 manufactured by MOCON from the U.S.A. The measurement results are summarized in Table 6.

### <Evaluation of Bending Load Resistance>

The laminates for a packaging material obtained as described above were subjected to bending load (stroke: 155 mm, bending operation: 440°) for five times in accordance with ASTM F 392 using a gelbo flex tester (Tester Industry K.K., product name: BE1006BE).

After the bending load, oxygen permeability and water vapor permeability of the laminates were measured. The measurement results are summarized in Table 6.

### <<Heat-sealing Test>>

The laminates for a packaging material obtained in the above-described Examples and Comparative Examples were cut into a size of 10 cm × 10 cm to prepare sample pieces. The sample piece was folded in two so that the heat seal layer was inside, and an area of 1 cm × 10 cm was heat-sealed under the condition of a temperature of 150 °C and a pressure of 1 kgf/cm² for 1 second.

The heat-sealed sample piece was cut into strips with a width of 15 mm, and both ends of the unheat-sealed sample were held by a tensile testing machine, and the peel strength (N/15 mm) was measured under the condition of a speed of 300 mm/min and a load range of 50N. The measurement results are summarized in Table 6.

The laminate for a packaging material obtained in Comparative Example 6-1 adhered to the heat seal bar and the peel strength could not be measured, therefore, the result was indicated as "-".

**[Table 6]**

| Table 6 | Proportion of Polyolefin (% by mass) | Recycl -ability evaluation | Strength evaluation (N) | Heat Resistance Evaluation | Oxygen barrier test (cc/m²/day/atm) | Water vapor barrier test (g/m²/day/atm) | Bending load resistance test | | Sealing test (N/15mm) |
|---|---|---|---|---|---|---|---|---|---|
| | | | | | | | Oxygen barrier properties (cc/m²/day/atm) | Water vapor barrier properties (g/m² /day/atm) | |
| Ex. 6-1 | 93 | ○ | 11.0 | ○ | 0.25 | 0.47 | 0.84 | 1.52 | 24 |
| Ex. 6-2 | 93 | ○ | 10.7 | ○ | 0.34 | 0.61 | 0.98 | 1.72 | 22 |
| Ex. 6-3 | 95 | ○ | 10.5 | ○ | 0.42 | 0.63 | 1.20 | 2.18 | 23 |
| Ex. 6-4 | 93 | ○ | 11.1 | ○ | 0.21 | 0.35 | 0.40 | 0.72 | 22 |
| Comp. Ex. 6-1 | 93 | ○ | 7.6 | × | 0.40 | 0.75 | 1.05 | 1.84 | - |
| Comp. Ex. 6-2 | 93 | ○ | 10.8 | ○ | 0.38 | 1.87 | 0.85 | 3.29 | 21 |
| Comp. Ex. 6-3 | 69 | × | 9.3 | ○ | 0.21 | 0.40 | 0.82 | 1.43 | 23 |

### Example 7-1

A biaxially stretched polypropylene film (product name: P2108, manufactured by Toyobo K.K.) having a thickness of 18 µm was prepared as a substrate.

An image was formed on one side of the substrate by a gravure printing method using a solvent type gravure ink (FINATO, manufactured by DIC Graphics K.K.).

A biaxially stretched polypropylene film (product name: P2108, manufactured by Toyobo K.K.) having a thickness of 18 µm was prepared, and to one surface of this film was formed an aluminum vapor-deposited film by the PVD method having a thickness of 30 nm. The deposition concentration (OD value) of the vapor-deposited film to be formed was determined as 3.0.

Further, a polyvinyl alcohol-based barrier coating agent (MFB7010, manufactured by Michelman K.K.) was applied onto the aluminum vapor-deposited film by a gravure method and dried to form a barrier coating layer having a thickness of 1 µm, thereby giving an intermediate layer.

As a heat seal layer, polypropylene (product name: FL7540L, density: 0.90 g/cm³, melting point: 138 °C, MFR: 7.0 g/10 min, manufactured by TPC K.K.) was extruded by the T-die method to form a film, and unstretched polypropylene film having a thickness of 35 µm was given.

The printed surface of the substrate and the surface to which the barrier coating layer is formed of the intermediate layer were laminated via a two-part curing polyurethane adhesive (product name: RU-3600 / H-689, manufactured by Rock Paint K.K.).

Further, the intermediate layer surface of the laminated film bonded as described above and the heat seal layer were bonded with the adhesive to obtain a laminate of the present invention. The proportion of the same polyolefin (PP) in the laminate thus obtained was 92% by mass.

### Example 7-2

A laminate for a packaging material of the present invention was produced in the same manner as in Example 7-1, except that the thickness of the aluminum vapor-deposited film was changed to 20 nm and the OD value of the vapor-deposited film was changed to 2.0. The proportion of the same polyolefin (PP) in the laminate for a packaging material thus obtained was 92% by mass.

### Example 7-3

A laminate for a packaging material of the present invention was prepared in the same manner as in Example 7-1 except that no barrier coating layer was provided. The proportion of the same polyolefin (PP) in the laminate for a packaging material thus obtained was 93% by mass.

### Example 7-4

A laminate for a packaging material of the present invention was prepared in the same manner as in Example 7-3, except that the two-part curing polyurethane adhesive was changed to a two-part curing adhesive containing a polyester polyol, an isocyanate compound, and a phosphate-modified compound (product name: PASLIM VM001/VM102CP, manufactured by DIC K.K.). The proportion of the same polyolefin (PP) in the laminate for a packaging material thus obtained was 92% by mass.

### Comparative Example 7-1

A laminate for a packaging material was obtained in the same manner as in Example 7-1, except that an unstretched polypropylene film (product name: P1108, manufactured by Toyobo K.K.) having a thickness of 18 µm was used as the substrate. The proportion of the same polyolefin (PP) in the laminate thus obtained was 92% by mass.

### Comparative Example 7-2

A laminate for a packaging material was obtained in the same manner as in Example 7-1 except that no vapor-deposited film was provided. The proportion of the same polyolefin (PP) in the laminate thus obtained was 92% by mass.

### Comparative Example 7-3

A laminate for a packaging material was obtained in the same manner as in Example 7-1 except that the substrate was a biaxially stretched polyester film (product name: E5100, manufactured by Toyobo K.K.) having a thickness of 12 µm. The proportion of the same polyolefin (PP) in the laminate thus obtained was 69% by mass.

### <<Recyclability Evaluation>>

Recyclability of the laminates for a packaging material obtained in the above Examples and Comparative Examples was evaluated based on the following evaluation criteria. The evaluation results are summarized in Table 7.

### (Evaluation Criteria)

○: The content of the same polyolefin in the laminate for a packaging material was 80 % by mass or more.

×: The content of the same polyolefin in the laminate for a packaging material was less than 80% by mass.

### <<Strength Evaluation>>

Strength of the laminates for a packaging material produced in the above Examples and Comparative Examples was measured by a tensile testing machine (product name: RTC-1310A, manufactured by Orientech K.K.) when the laminates were pierced with a needle having a diameter of 0.5 mm. The piercing speed was 50 mm/min. The measurement results are summarized in Table 7.

### <<Evaluation of Heat Resistance>>

Two test pieces each having a length of 80 mm and a width of 80 mm were produced from the laminates for a packaging material obtained in the above Examples and Comparative Examples.

The two test pieces were superimposed so that the heat seal layers faces each other, and three sides were heat-sealed at 150 °C to produce a small bag-form packaging material.

The produced packaging material was visually observed, and the heat resistance of the laminate for packaging material was evaluated based on the following evaluation criteria. The evaluation results are summarized in Table 7.

### (Evaluation Criteria)

○: No wrinkles were generated on the surface of the packaging material, and no adhesion to the heat seal bar was observed.

×: Wrinkles were generated on the surface of the packaging material, and adhesion to the heat seal bar was observed, thus the bag could not be prepared.

### <<Printability Evaluation>>

In the above Examples and Comparative Examples, images formed on the substrates were visually observed, and printability was evaluated based on the following evaluation criteria. The evaluation results are summarized in Table 7.

### (Evaluation Criteria)

○: Dimensional stability at the time of printing was good, and a good image was able to be formed with no rubbing, bleeding, etc. occuring.

×: Stretching or shrinking of the film occurred during printing, and rubbing or bleeding occurred in the formed image.

### <<Evaluation of Oxygen Barrier Properties>>

The laminates for a packaging material obtained in the above-described Examples and Comparative Examples were cut into an A4 size, and oxygen permeability (cc/m²/day/atm) under an environment of 23 °C and relative humidity of 90% was measured using OXTRAN2 / 20 manufactured by MOCON from the U.S.A. The measurement results are summarized in Table 7.

Note that, those exceeded the measurement of 200 cc/m²/day/atm were marked as "-".

### <<Evaluation of Water Vapor Barrier Properties>>

The laminates obtained in the above-described Examples and Comparative Examples were cut into an A4 size, and water vapor transmission rate (g/m²/day/atm) under an environment of 40 °C and relative humidity of 90% was measured using PERMATRAN 3/31 manufactured by MOCON from the U.S.A. The measurement results are summarized in Table 7.

### <Evaluation of Bending Load Resistance>

The laminates for a packaging material obtained as described above were subjected to bending load (stroke: 155 mm, bending operation: 440°) for five times in accordance with ASTM F 392 using a gelbo flex tester (Tester Industry K.K., product name: BE1006BE).

After the bending load, oxygen permeability and water vapor permeability of the laminates were measured. The measurement results are summarized in Table 7.

### <<Heat-sealing Test>>

The laminates for a packaging material obtained in the above-described Examples and Comparative Examples were cut into a size of 10 cm × 10 cm to prepare sample pieces. The sample piece was folded in two so that the heat seal layer was inside, and an area of 1 cm × 10 cm was heat-sealed under the condition of a temperature of 150 °C and a pressure of 1 kgf/cm² for 1 second.

The heat-sealed sample piece was cut into strips with a width of 15 mm, and both ends of the unheat-sealed sample were held by a tensile testing machine, and the peel strength (N/15 mm) was measured under the condition of a speed of 300 mm/min and a load range of 50N. The measurement results are summarized in Table 7.

The laminate for a packaging material obtained in Comparative Example 7-1 adhered to the heat seal bar and the peel strength could not be measured, therefore, the result was indicated as "-".

**[Table 7]**

| Table 7 | Proportion of Polyolefin (% by mass) | Recycl -ability evaluation | Strength evaluation (N) | Heat Resistance Evaluation | Oxygen barrier test (cc/m²/day/atm) | Water vapor barrier test (g/m²/day/atm) | Bending load resistance test | | Sealing test (N/15mm) |
|---|---|---|---|---|---|---|---|---|---|
| | | | | | | | Oxygen barrier properties (cc/m²/day/atm) | Water vapor barrier properties (g/m²/day/atm) | |
| Ex. 7-1 | 92 | ○ | 11.0 | ○ | 0.25 | 0.47 | 0.84 | 1.52 | 24 |
| Ex. 7-2 | 92 | ○ | 10.7 | ○ | 0.34 | 0.61 | 0.98 | 1.72 | 22 |
| Ex. 7-3 | 93 | ○ | 10.5 | ○ | 0.42 | 0.63 | 1.20 | 2.18 | 23 |
| Ex. 7-4 | 92 | ○ | 11.1 | ○ | 0.21 | 0.35 | 0.40 | 0.72 | 22 |
| Comp. Ex. 7-1 | 92 | ○ | 7.6 | × | 0.40 | 0.75 | 1.05 | 1.84 | - |
| Comp. Ex. 7-2 | 92 | ○ | 10.8 | ○ | - | 3.42 | - | 4.35 | 24 |
| Comp. Ex. 7-3 | 69 | × | 9.3 | ○ | 0.21 | 0.40 | 0.82 | 1.43 | 23 |

### Example 8-1

An ethylene-vinyl alcohol copolymer (EVOH, manufactured by Kuraray K.K., product name: EVAL E171B, density: 1.14 g/cm³, melting point: 165 °C, MFR: 1.7 g/10 min, ethylene content: 44% by mass) composing the gas barrier resin layer;
polyolefin (product name: Admer QF551, manufactured by Mitsui Chemicals, K.K.; density: 0.89 g/cm³ ; melting point: 135 °C; MFR: 2.5 g/10 min) composing the adhesive resin layer; and
polypropylene (product name: FL7540L, density: 0.90 g/cm³, melting point: 138 °C, MFR: 7.0 g/10 min, manufactured by TPC K.K.) composing the polyolefin resin layer;
were co-extruded into a film by the T-die method and the film was stretched 3.1 folds each in the machine direction (MD) and the traverse direction (TD) to give a laminate for a gas barrier intermediate layer having a structure comprising a gas barrier resin layer (1 µm), an adhesive resin layer (2 µm), and a polyolefin resin layer (15 µm).

An aluminum vapor-deposited film having a thickness of 30 nm was formed by the PVD method on the gas barrier resin layer of the laminate for a gas barrier intermediate layer produced as described above. The deposition concentration (OD value) of the formed vapor-deposited film was measured to be 3.0.

A biaxially stretched polypropylene film (product name: P2108, manufactured by Toyobo K.K.) having a thickness of 18 µm was prepared as a substrate.

An image was formed on one side of the biaxially stretched polypropylene film by a gravure printing method using a solvent type gravure ink (FINATO, manufactured by DIC Graphics K.K.).

The surface to which the aluminum vapor-deposited film is formed of the laminate for a gas barrier intermediate layer and the surface to which the image is formed of a biaxially oriented polypropylene film were laminated via a two-part curing polyurethane adhesive (product name: RU-3600 / H-689, manufactured by Rock Paint K.K.).

Next, the polypropylene was extruded and formed into a film by the T-die method to obtain an unstretched polypropylene film having a thickness of 35 µm composing the heat seal layer.

An aluminum vapor-deposited film having a thickness of 30 nm was formed by the PVD method on one surface of the heat seal layer produced as described above. The deposition concentration (OD value) of the formed vapor-deposited film was determined as 3.0.

The polyolefin resin layer provided in the laminate for a gas barrier intermediate layer and the surface to which the aluminum vapor-deposited film is formed of a heat seal layer were laminated via a two-part curing polyurethane adhesive (product name: RU-3600 / H-689, manufactured by Rock Paint K.K.) to give a laminate for a packaging material of the present invention. The proportion of the same polyolefin (PP) in the laminate thus obtained was 92% by mass.

### Example 8-2

A laminate for a packaging material of the present invention was prepared in the same manner as in Example 8-1, except that the thickness of both the aluminum vapor-deposited films provided on the laminate for a gas barrier intermediate layer and the heat seal layer was changed to 20 nm, and the OD value of the vapor-deposited film was changed to 2.0. The proportion of the same polyolefin (PP) in the laminate thus obtained was 92% by mass.

### Example 8-3

A laminate for a packaging material of the present invention was produced in the same manner as in Example 8-1, except that the two-part curing polyurethane adhesive used for adhesion between the surface to which the aluminum vapor-deposited film is formed of the above-described laminate for a gas barrier intermediate layer and the surface to which the image is formed of the substrate, and adhesion between the polyolefin resin layer provided in the laminate for a gas barrier intermediate layer and the surface to which the aluminum vapor-deposited film is formed of the heat seal layer was changed to a two-part curing adhesive containing a polyester polyol, an isocyanate compound, and a phosphate-modified compound (product name: PASLIM VM001/VM102CP, manufactured by DIC K.K.). The proportion of the same polyolefin (PP) in the laminate thus obtained was 92% by mass.

### Comparative Example 8-1

A laminate for a packaging material was obtained in the same manner as in Example 8-1, except that an unstretched polypropylene film having a thickness of 18 µm (product name: P1108, manufactured by Toyobo K.K.) was used as the substrate. The proportion of the same polyolefin (PP) in the laminate thus obtained was 92% by mass.

### Comparative Example 8-2

The above-described polypropylene was extruded by the T-die method into a film, thereby giving an unstretched polypropylene film having a thickness of 180 µm, and then the film was stretched 3.1 folds each in the machine direction (MD) and in the traverse direction (TD) to obtain a stretched polypropylene film (a) having a thickness of 18 µm.

On one surface of the stretched polypropylene film thus produced as above was formed an image by a gravure printing method using a solvent type gravure ink (FINATO, manufactured by DIC Graphics K.K.).

The above-described polypropylene was extruded by a T-die method into a film to give an unstretched polypropylene film having a thickness of 180 µm, and then the film was stretched 3.1 folds each in the machine direction (MD) and in the traverse direction (TD) to obtain a stretched polypropylene film (b) having a thickness of 18 µm.

The surface to which the image is formed of the stretched polypropylene film (a) and the stretched polypropylene film (b) were laminated via a two-part curing polyurethane adhesive (product name: RU-3600 / H-689, manufactured by Rock Paint K.K.).

Next, the above-described polypropylene was extruded by the T-die method into a film to give an unstretched polypropylene film having a thickness of 35 µm.

An aluminum vapor-deposited film having a thickness of 30 nm was formed by the PVD method on one side of the unstretched polypropylene film produced as described above. The deposition concentration (OD value) of the formed vapor-deposited film was determined as 3.0.

The stretched polypropylene film (b) and the surface to which the vapor-deposited film is formed of the unstretched polypropylene film and the surface to which the image is formed of the biaxially stretched polypropylene film were laminated via a two-part curing polyurethane adhesive (product name: RU-3600 / H-689, manufactured by Rock Paint K.K.) to obtain a laminate for a packaging material. The proportion of the same polyolefin (PP) in the laminate thus obtained was 92% by mass.

### Comparative Example 8-3

A laminate for a packaging material was obtained in the same manner as in Example 8-1, except that a stretched polyester film (product name: E5100, manufactured by Toyobo K.K.) having a thickness of 12 µm was used as a substrate. The proportion of the same polyolefin (PP) in the laminate thus obtained was 74% by mass.

### <<Recyclability Evaluation>>

Recyclability of the laminates for a packaging material obtained in the above Examples and Comparative Examples was evaluated based on the following evaluation criteria. The evaluation results are summarized in Table 8.

### (Evaluation Criteria)

○: The content of the same polyolefin in the laminate for a packaging material was 80 % by mass or more.

×: The content of the same polyolefin in the laminate for a packaging material was less than 80% by mass.

### <<Strength Evaluation>>

Strength of the laminates for a packaging material produced in the above Examples and Comparative Examples was measured by a tensile testing machine (product name: RTC-1310A, manufactured by Orientech K.K.) when the laminates were pierced with a needle having a diameter of 0.5 mm. The piercing speed was 50 mm/min. The measurement results are summarized in Table 8.

### <<Evaluation of Heat Resistance>>

Two test pieces each having a length of 80 mm and a width of 80 mm were produced from the laminates for a packaging material obtained in the above Examples and Comparative Examples.

The two test pieces were superimposed so that the heat seal layers faces each other, and three sides were heat-sealed at 150 °C to produce a small bag-form packaging material.

The produced packaging material was visually observed, and the heat resistance of the laminate for packaging material was evaluated based on the following evaluation criteria. The evaluation results are summarized in Table 8.

### (Evaluation Criteria)

○: No wrinkles were generated on the surface of the packaging material, and no adhesion to the heat seal bar was observed.

×: Wrinkles were generated on the surface of the packaging material, and adhesion to the heat seal bar was observed, thus the bag could not be prepared.

### <<Printability Evaluation>>

In the above Examples and Comparative Examples, images formed on the substrates were visually observed, and printability was evaluated based on the following evaluation criteria. The evaluation results are summarized in Table 8.

### (Evaluation Criteria)

○: Dimensional stability at the time of printing was good, and a good image was able to be formed with no rubbing, bleeding, etc. occuring.

×: Stretching or shrinking of the film occurred during printing, and rubbing or bleeding occurred in the formed image.

### <<Evaluation of Oxygen Barrier Properties>>

The laminates for a packaging material obtained in the above-described Examples and Comparative Examples were cut into an A4 size, and oxygen permeability (cc/m²/day/atm) under an environment of 23 °C and relative humidity of 90% was measured using OXTRAN2 / 20 manufactured by MOCON from the U.S.A. The measurement results are summarized in Table 8.

### <<Evaluation of Water Vapor Barrier Properties>>

The laminates obtained in the above-described Examples and Comparative Examples were cut into an A4 size, and water vapor transmission rate (g/m²/day/atm) under an environment of 40 °C and relative humidity of 90% was measured using PERMATRAN 3/31 manufactured by MOCON from the U.S.A. The measurement results are summarized in Table 8.

### <Evaluation of Bending Load Resistance>

The laminates for a packaging material obtained as described above were subjected to bending load (stroke: 155 mm, bending operation: 440°) for five times in accordance with ASTM F 392 using a gelbo flex tester (Tester Industry K.K., product name: BE1006BE).

After the bending load, oxygen permeability and water vapor permeability of the laminates were measured. The measurement results are summarized in Table 8.

### <<Heat-sealing Test>>

The laminates for a packaging material obtained in the above-described Examples and Comparative Examples were cut into a size of 10 cm × 10 cm to prepare sample pieces. The sample piece was folded in two so that the heat seal layer was inside, and an area of 1 cm × 10 cm was heat-sealed under the condition of a temperature of 150 °C and a pressure of 1 kgf/cm² for 1 second.

The heat-sealed sample piece was cut into strips with a width of 15 mm, and both ends of the unheat-sealed sample were held by a tensile testing machine, and the peel strength (N/15 mm) was measured under the condition of a speed of 300 mm/min and a load range of 50N. The measurement results are summarized in Table 8.

The laminate for a packaging material obtained in Comparative Example 8-1 adhered to the heat seal bar and the peel strength could not be measured, therefore, the result was indicated as "-".

**[Table 8]**

| Table 8 | Proportion of Polyolefin (% by mass) | Recycl -ability evaluation | Strength evaluation (N) | Heat Resistance Evaluation | Print -ability Evaluation | Oxygen Barrier Test (cc/m²/day/atm) | Water Vapor Barrier Test (g/m²/day/atm) | Bending Load Resistance Test | | Sealing Test (N/15mm) |
|---|---|---|---|---|---|---|---|---|---|---|
| | | | | | | | | Oxygen barrier properties (cc/m²/day/atm) | Water vapor barrier properties (g/m²/day/atm) | |
| Ex. 8-1 | 92 | ○ | 15.3 | ○ | ○ | 0.15 | 0.18 | 0.38 | 2.12 | 23 |
| Ex. 8-2 | 92 | ○ | 15.1 | ○ | ○ | 0.24 | 0.28 | 0.62 | 2.61 | 23 |
| Ex. 8-3 | 92 | ○ | 15.6 | ○ | ○ | 0.12 | 0.13 | 0.23 | 0.27 | 22 |
| Comp. Ex. 8-1 | 92 | ○ | 12.2 | × | × | 0.15 | 0.17 | 0.41 | 2.17 | - |
| Comp. Ex. 8-2 | 92 | ○ | 13.8 | ○ | ○ | 0.35 | 0.38 | 6.21 | 7.35 | 21 |
| Comp. Ex. 8-3 | 74 | × | 14.2 | ○ | ○ | 0.14 | 0.18 | 0.35 | 2.20 | 20 |

### Description of Symbols

10: Heat-sealable Laminate, 11: Gas Barrier Resin Layer, 12: Adhesive Resin Layer, 13: Heat Seal Layer, 14: First Heat Seal Layer, 15: Second Heat Seal Layer, 16: Laminate for a Packaging Material, 17: Substrate, 18: Vapor-Deposited Film, 19: Adhesive Layer, 20: Laminated Substrate, 21: Substrate Body, 22: Barrier Coating Layer, 23: Laminate for a Packaging Material, 24: Heat Seal Layer, 25: Vapor-Deposited Film, 26: Adhesive Layer, 27: First Heat Seal Layer, 28: Second Heat Seal Layer, 30: Laminate For Gas Barrier Intermediate Layer, 31: Gas Barrier Resin Layer, 32: Polyolefin Resin Layer, 33: Adhesive Resin Layer, 34: Laminate for a Packaging Material, 35: Substrate, 36: Heat Seal Layer, 37: Vapor-Deposited Film, 38: Adhesive Layer

## Claims

1. A heat-sealable laminate comprising a gas barrier resin layer, an adhesive resin layer, and a heat seal layer, wherein
the heat seal layer is composed of polyolefin, and
the gas barrier resin layer, the adhesive resin layer and the heat seal layer are co-extruded unstretched resin films.

2. The heat sealing laminate according to claim 1, wherein
the gas barrier resin layer comprises an ethylene-vinyl alcohol copolymer.

3. A laminate for a packaging material comprising a substrate and the heat-sealable laminate according to claim 1 or 2, wherein
the substrate is composed of the same material as the heat seal layer,
the substrate is a stretched resin film,
the same material is polyolefin, and
the thickness of the gas barrier resin layer is smaller than the thickness of the heat seal layer.

4. A laminated substrate comprising a substrate body and a barrier coating layer, wherein
the substrate is composed of polyolefin, and
the substrate body is a stretched resin film.

5. The laminated substrate according to claim 4, wherein
the thickness of the barrier coating layer is smaller than the thickness of the substrate body.

6. The laminated substrate according to claim 4 or 5, wherein
the laminated substrate comprises a vapor-deposited film between the substrate body and the barrier coating layer.

7. A laminate for a packaging material comprising the laminated substrate according to any one of claims 4 to 6 and a heat seal layer, wherein
the heat seal layer is composed of the same material as the substrate body, and
the same material is polyolefin.

8. A laminate for a packaging material comprising a laminated substrate and a heat-sealable laminate, wherein
the substrate comprises a substrate body and a barrier coating layer,
the heat-sealable laminate comprises a vapor-deposited film and a heat seal layer,
the substrate body and the heat seal layer are composed of the same material,
the same material is polyolefin,
the substrate body is a stretched resin film,
the thickness of the barrier coating layer is smaller than the thickness of the substrate body, and
the thickness of the vapor-deposited film is smaller than the thickness of the heat seal layer.

9. A laminate for a packaging material comprising at least a laminated substrate, an adhesive layer, and a heat-sealable laminate, wherein
the substrate comprises a substrate body and a first vapor-deposited film,
the heat-sealable laminate comprises a second vapor-deposited film and a heat seal layer,
the substrate body and the heat seal layer are composed of the same material,
the same material is polyolefin,
the substrate body is a stretched resin film,
the thickness of the first vapor-deposited film is smaller than the thickness of the substrate body,
the thickness of the second vapor-deposited film is smaller than the thickness of the heat seal layer.

10. A laminate for a gas barrier intermediate layer comprising a gas barrier resin layer and a polyolefin resin layer and being a co-extruded unstretched resin film.

11. A laminate for a packaging material comprising a substrate, the laminate for a gas barrier intermediate layer according to claim 10, and a heat seal layer, wherein
the substrate, the polyolefin resin layer and the heat seal layer are composed of the same material,
and the same material is polyolefin.

12. A packaging material composed of the laminate for a packaging material according to any one of claims 3, 7 to 9 and 11.
